# EUROPEAN PATENT APPLICATION

(11) **EP 1 580 928 A2**
(43) Date of publication of application: **28.09.2005**
(21) Application number: 05251649.9
(22) Date of filing: 18.03.2005
(51) Int. Cl.: H04L 12/24, H04L 12/26, H04L 12/28

(54) **Input/output terminal, master apparatus, slave apparatus, information processing system and method, and programs for input/output terminal, master apparatus, and slave apparatus**

(30) Priority: 24.03.2004 JP 2004086569
(71) Applicant: SONY CORPORATION, Tokyo 141 (JP)
(72) Inventor: Konishi, Yosuke, c/o Sony Corporation, Tokyo (JP)
(74) Representative: Horner, David Richard

(57) **Abstract**

In the embodiments of the information processing system and method of the present invention, logical connection information about all of the slave apparatus is gathered from the respective slave apparatus to the master apparatus for intensive management, and transmitted from the master apparatus to at least one of the input/output terminal and the slave apparatus. At the input/output terminal, a logical connection status is displayed on the basis of the logical connection information. As a result, one can grasp a situation as to between which ones of a plurality of slave apparatuses data is actually being exchanged.

## Description

### BACKGROUND OF THE INVENTION

### Field of the Invention

The present invention relates to an input/output terminal, a master apparatus and slave apparatus, an information processing system and method, and programs for the input/output terminal, the master apparatus and the slave apparatus, which are applied to the information processing system configured such that a plurality of information processing apparatuses are connected to a network.

### Description of Related Art

Several techniques have conventionally been available for visually displaying connection situations of a network such as a LAN (Local Area Network). Their major applications include acquisition by a network administrator or the like of information such as information about a plurality of terminals, printers, servers within a company or the like, and their operating statuses, so that the visual display helps the administrator or the like to grasp their connection situations on the network.

These techniques accomplish display of the connection situations on the network by implementing SNMP (Simple Network Management Protocol) which is a network management protocol, and other unique protocols, and acquiring IP (Internet Protocol) addresses, usable port numbers, operating statuses, and the like which are necessary as network information.

For example, the document "Sirius", [online], Kabushiki Kaisha IST [searched on November 25, 2003], Internet <URL: http://www.istinc.co.jp/netkids/index.html> (referred to herein as Non-Patent Document 1) discloses software that enables visual display of current connection situations, traffic volume, and the like of a network using SNMP. As a result, a user such as an administrator of the network can grasp the current connection situations, or visually manage the operating statuses of the network.

However, it is indeed possible to visually display connection situations of a network using these techniques, but the connection situations displayed are only at the levels of the network layer or below in the OSI (Open Systems Interconnection) reference model, and thus the visual display is merely as to whether or not ICMP (Internet Control Message Protocol) packets are to be acquired, i.e., whether or not a connection is established using a Ping command. Therefore, the user cannot instinctively recognize whether end-to-end data exchange is actually being performed between which apparatus, in a logical network connection (the transport layer and upper layer in the OSI reference model) between respective apparatus.

Further, any of these techniques aims at analyzing connection situations of a network. Thus, although visual display is possible, connection situations between apparatuses within the network cannot be set over a screen displayed, except for only limited functions such as changing an IP address, and turning off the power of the apparatus.

Furthermore, routing of this IP network is dependent on a routing protocol implemented in the network layer, and thus the user cannot change the routing freely.

That is, these conventional techniques have mainly been used for management of a network such as an LAN within a company, and thus there has been a problem that they are not necessarily useful for general users who do not have special knowledge, unlike an administrator or the like.

### SUMMARY OF THE INVENTION

The present invention has been made in view of such problems, and a first embodiment thereof provides a means by which actual data exchange situations between apparatuses within a network can be grasped easily. A second embodiment of the present invention provides means by which connection situations between apparatuses within the network can be set and changed.

One embodiment of an input/output terminal of the present invention includes an acquisition section for acquiring logical connection information designating a mutual logical connection status between information processing apparatus, and a display section for displaying the logical connection status on the basis of the logical connection information acquired by the acquisition section. In this case, the above-mentioned display section may preferably have a function of accepting a change request operation for requesting a change of the logical connection status.

One embodiment of a program for an input/output terminal of the present invention causes the input/output terminal to execute a step of acquiring logical connection information designating a mutual logical connection status between information processing apparatuses, and a step of displaying the above-mentioned logical connection status on the basis of the logical connection information acquired.

One embodiment of a master apparatus of the present invention includes a connection information gathering section for gathering logical connection information designating a mutual logical connection status between slave apparatuses from each of the slave apparatuses, a management section for managing the above-mentioned logical connection information gathered by the connection information gathering section, and a connection information supplying section for supplying the logical connection information managed by the management section to at least one of an input/output terminal and the slave apparatus. This master apparatus may preferably include a change request transmission section for specifying corresponding slave apparatus on the basis of a change request as to the logical connection status made from the input/output terminal, and properly assigning the change request to the specified slave apparatus for transmission.

One embodiment of a program for a master apparatus of the present invention causes the master apparatus to execute a step of gathering logical connection information designating a mutual logical connection status between slave apparatuses from each of the slave apparatuses, a step of managing the logical connection information gathered, and a step of supplying the logical connection information managed to at least one of an input/output terminal and the slave apparatus.

One embodiment of a slave apparatus of the present invention includes a holding section for holding logical connection information designating a mutual logical connection status between a self apparatus and different apparatus, and a connection information transmission section for transmitting the logical connection information to a master apparatus. This slave apparatus may preferably further include a reception section for receiving a change request as to the logical connection status transmitted from the master apparatus, and a changing section for actually changing the mutual logical connection status between the self apparatus and the different apparatus on the basis of the change request as to the logical connection status received by the reception section.

One embodiment of a program for a slave apparatus of the present invention causes the slave apparatus to execute a step of holding logical connection information designating a mutual logical connection status between a self apparatus and different apparatus, and a step of transmitting the logical connection information to a master apparatus.

One embodiment of an information processing system of the present invention is configured to include slave apparatus, a master apparatus, and an input/output terminal, in which: each of the slave apparatuses includes a holding section for holding logical connection information designating a mutual logical connection status between a self apparatus and different apparatus, and a connection information transmission section for transmitting the logical connection information to a master apparatus; the master apparatus includes a connection information gathering section for gathering the logical connection information, a management section for managing the logical connection information gathered by the connection information gathering section, and a connection information supplying section for supplying the logical connection information managed by the management section to at least one of the above-mentioned input/output terminal and the slave apparatus; and the input/output terminal includes an acquisition section for acquiring the logical connection information, and a display section for displaying the logical connection status between the slave apparatuses on the basis of the logical connection information acquired by the acquisition section.

One embodiment of an information processing method of the present invention is configured to include a process by an input/output terminal, a process by a master apparatus, and a process by slave apparatus, in which: the process by the input/output terminal includes a step of acquiring logical connection information designating a mutual logical connection status between the slave apparatuses, and a step of displaying the logical connection status on the basis of the logical connection information; the process by the master apparatus includes a step of gathering the logical connection information from the respective slave apparatus, a step of managing the logical connection information gathered, and a step of supplying the logical connection information managed to at least one of the input/output terminal and the slave apparatus; and the process by the slave apparatus includes a step of holding the logical connection information between a self apparatus and different apparatus, and a step of transmitting the logical connection information to the master apparatus.

In the embodiments of the input/output terminal and the program for the input/output terminal of the present invention, logical connection information is acquired, and a mutual logical connection status between information processing apparatuses is displayed on the basis of the logical connection information. Here, the "logical connection" means any connection through which specific data can be exchanged between apparatuses within a network, such as, e.g., a connection at the transport layer or layers there-above in the OSI (Open Systems Interconnection) reference model, and is thus a concept that is severed from connections at the network layer or layers there-below. Therefore, by displaying this logical connection status, one can grasp a situation as to between which ones of a plurality of apparatus data is to be actually exchanged (or data is currently being exchanged). Particularly, where the display is made visually, such a situation can be grasped at a glance. Here, the term "visual" means a manner in which one can recognize things with one's eyes, to the letter, and is thus a generic concept that includes "graphical" and "textual". Note that the term "graphical" means a manner in which one can recognize things with one's eyes through graphics such as pictures and photos, and the term "textual" means a manner in which one can recognize things with one's eyes through characters and the like excluding graphics.

In the embodiments of the master apparatus and the program for the master apparatus of the present invention, logical connection information is gathered by the master apparatus from the respective slave apparatus, and managed therein. The logical connection information is further supplied from the master apparatus to at least one of the input/output terminal and the slave apparatus, and shared for use among the supply destinations.

In the embodiments of the slave apparatus and the program for the slave apparatus of the present invention, logical connection information designating a mutual logical connection status between a self apparatus and different apparatus is transmitted from the respective slave apparatus to the master apparatus. As a result, the logical connection information designating the logical connection status between all of the slave apparatuses can be gathered intensively by the master apparatus.

In the embodiments of the information processing system and method of the present invention, logical connection information about all of the slave apparatus is gathered from the respective slave apparatus to the master apparatus for intensive management, and transmitted from the master apparatus to at least one of the input/output terminal and the slave apparatus. At the input/output terminal, a logical connection status is displayed on the basis of the logical connection information. As a result, one can grasp a situation as to between which ones of a plurality of slave apparatus data are actually being exchanged.

Note that transmission/reception of the logical connection information between the master apparatus and the slave apparatus can be performed by using, e.g., a software cell. The "software cell" means a control packet or an information packet having a predetermined format for exchanging programs and data between a plurality of information processing apparatuses.

According to the embodiments of the input/output terminal and the program for the input/output terminal of the present invention, logical connection information is acquired to display a logical connection status on the basis of the logical connection information. Therefore, a user can recognize a mutual logical connection status between information processing apparatuses, i.e., between which ones of the plurality of information processing apparatus data can actually be exchanged (data is actually being exchanged). That is, without having any special network knowledge, the user can grasp communication situations between apparatuses within a network easily. Particularly, where the logical connection status is displayed visually, the status can be recognized instinctively, whereby the user can recognize communication situations between the apparatuses within the network more easily. Further, where a change request operation for requesting a change of such a logical connection status is to be accepted, the user is provided with a means for getting involved in communication situation control within the network. Thus, if, e.g., such a change request operation is configured to be actually reflected on the respective information processing apparatus within the network, it also becomes possible to arbitrarily set and change communication situations within the network.

According to the embodiments of the master apparatus and the program for the master apparatus of the present invention, logical connection information is gathered from the respective slave apparatus for intensive management by the master apparatus, and the logical connection information is supplied to at least one of the input/ output terminal and the slave apparatus. Therefore, the logical connection status between the respective slave apparatus within the network can be managed centrally by the master apparatus, and further, the logical connection information can be shared among the respective slave apparatus and the input/output terminal. Consequently, e.g., if the slave apparatus and the input/output terminal are provided with a function of displaying the logical connection information, it becomes also possible for the user to know communication situations within the network. Particularly, when a change request as to the logical connection status between the slave apparatus is made, if it is configured such that the master apparatus specifies a slave apparatus whose connections should be changed and transmits the change request to the corresponding slave apparatus, the user has to make such a change request only to the master apparatus, without having to perform a change request operation individually to the corresponding respective slave apparatus. Therefore, if, e.g., each slave apparatus is provided with a function of changing the logical connection status, it becomes implementable even to change the actual logical connection status between the corresponding slave apparatus only through a single operation by the user.

According to the embodiments of the slave apparatus and the program for the slave apparatus of the present invention, logical connection information designating a mutual logical connection status between a self apparatus and different apparatus is held, and the logical connection information is transmitted. Therefore, the logical connection information can be easily gathered centrally in the master apparatus. Consequently, e.g., it becomes possible to manage the logical connection status between the respective slave apparatus within a network by the master apparatus on a centralized basis, and also construct a network such that the logical connection information is shared among the respective slave apparatus and the input/output terminal. Particularly, when each slave apparatus receives a change request as to the logical connection status from the master apparatus, if the logical connection status between the self apparatus and different apparatus is configured to be changed in accordance therewith, it becomes possible to also set and change communication situations within the network.

According to the embodiments of the information processing system and method of the present invention, the master apparatus supplies logical connection information gathered from the respective slave apparatus for management to at least one of the input/output terminal and the slave apparatus, and the input/output terminal displays a logical connection status on the basis of the logical connection information. Therefore, the user can grasp communication situations between all of the apparatuses within a network totally. Particularly, where it is configured such that: the input/output terminal accepts a change request operation as to a logical connection status; the master apparatus specifies corresponding slave apparatus on the basis of the change request, and properly assigns the change request to the specified slave apparatus for transmission; and the slave apparatus receives the change request and actually changes the logical connection status between the self apparatus and the different apparatus on the basis thereof, the user can set and change communication situations between all of the apparatuses within the network easily through the input/ output terminal.
Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a block diagram representing an entire configuration of an information processing system according to an embodiment of the present invention;
FIG. 2 is a block diagram representing a schematic configuration of a TV apparatus according to an embodiment of the present invention;
FIG. 3 is a block diagram representing a schematic configuration of a DVD recorder according to an embodiment of the present invention;
FIG. 4 is a block diagram representing a schematic configuration of a multiplayer according to an embodiment of the present invention;
FIG. 5 is a block diagram representing a schematic configuration of a server according to an embodiment of the present invention;
FIG. 6 is a block diagram representing a schematic configuration of a remote controller according to an embodiment of the present invention;
FIG. 7 is a diagram representing an example of a configuration of a software cell according to an embodiment of the present invention;
FIG. 8 is a block diagram representing an example of a data configuration where a DMA command of FIG. 7 is a status return command;
FIG. 9 is a block diagram representing an example of a basic configuration of software held by an information processing apparatus according to an embodiment of the present invention;
FIG. 10 is a diagram representing an example of a software configuration held by the TV apparatus of FIG. 1;
FIG. 11 is a diagram representing an example of a software configuration held by the DVD recorder of FIG. 1;
FIG. 12 is a diagram representing an example of a software configuration held by the multiplayer of FIG. 1;
FIG. 13 is a diagram representing an example of a software configuration held by the server of FIG. 1;
FIG. 14 is a diagram representing an example of a software configuration held by the remote controller of FIG. 1;
FIG. 15 is a block diagram representing by abstraction a main portion of a configuration of each of the information processing apparatuses in the information processing system of FIG. 1;
FIG. 16 is a diagram representing an example of display on a display section of the remote controller of FIG. 1;
FIG. 17 is a flow diagram representing a process of performing visual display on the display section of the remote controller of FIG. 1;
FIG. 18 is a block diagram representing by abstraction an operation performed where a connection set on the display section of the remote controller of FIG. 1 is to be reflected, together with a main portion of the configuration of the information processing system;
FIG. 19 is a flow diagram representing a process of reflecting the connection set on the display section of the remote controller of FIG. 1;
FIG. 20 is a flow diagram representing a process of visually displaying the reflected connection on the display section of the remote controller; and
FIG. 21 is a block diagram representing by abstraction an operation of a time division multiplexing process of data to be exchanged between input/output channels, together with a part of a main portion of the configuration of the information processing system.

### DESCRIPTION OF THE PREFERRED EMBODIMENTS

A mode for carrying out the present invention (hereinafter referred to simply as "embodiment") will be described below in detail with reference to the drawings.

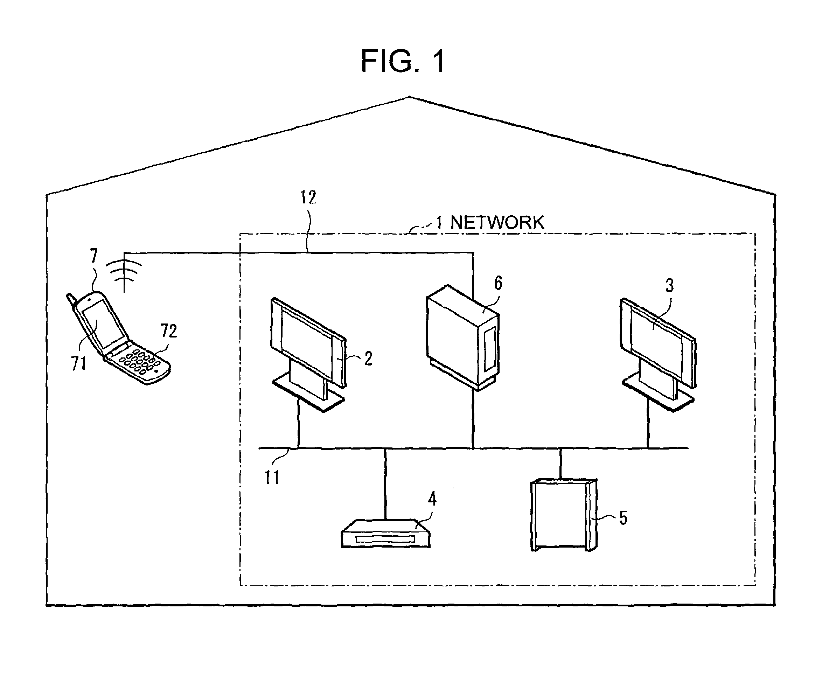

FIG. 1 represents an entire configuration of an information processing system according to an embodiment of the present invention. This information processing system includes a home network 1 that has a plurality of information processing apparatuses 2 to 5, a server 6 for managing these information processing apparatuses 2 to 5, and a LAN cable 11 for interconnecting these information processing apparatuses 2 to 5 and the server 6. Further, it is configured such that a remote controller 7 having a data input/output function can be connected to this home network 1 through a wireless communication path 12. In the present embodiment, the information processing apparatuses 2 to 5 are described as a television receiver (hereinafter referred to as "TV apparatus") 2, a TV apparatus 3, a DVD (Digital Versatile Disc) recorder 4, and a multiplayer 5, respectively. However, where they are referred to collectively, they are described simply as the information processing apparatuses 2 to 5.

Each of the information processing apparatuses 2 to 5 includes a plurality of input/output channels (e.g., in a case of the TV apparatus 2, two video/audio input channels), and circuit units connected to these input/output channels, and it is configured such that every exchange of data between these input/output channels is performed by using only the LAN cable 11. Of course, exchange of data between the information processing apparatuses 2 to 5 and the server 6 is also performed through the LAN cable 11.

The server 6 is arranged to totally manage apparatus information held by each of the information processing apparatuses 2 to 5. Here, the apparatus information is information designating, e.g., power supply states (whether the power supply is ON or OFF) of each of the information processing apparatuses, the type of the information processing apparatus, the type of input/output interface of the information processing apparatus, where the interface is connected to. The server 6 has a function of acquiring apparatus information held by each of the information processing apparatuses 2 to 5 through the network, for transmission to a remote controller 7.

The remote controller 7 includes a display section 71 that can display picture, textual information, and the like, and an operation section 72 which a user operates when inputting information, and has a function of visually displaying mutual logical connection situations between the respective information processing apparatuses 2 to 5 on the display section 71 on the basis of the apparatus information received from the server 6.

Here, the remote controller 7, server 6 and information processing apparatuses 2 to 5 correspond to specific examples of an "input/output terminal", a "master apparatus", and "slave apparatus", respectively. However, the information processing apparatuses are not limited to the types mentioned above, but may include other types of equipment (e.g., a CD (Compact Disk (registered trademark) player, an audio speaker, a home projector, a personal computer, or the like) in place thereof (or in addition thereto).

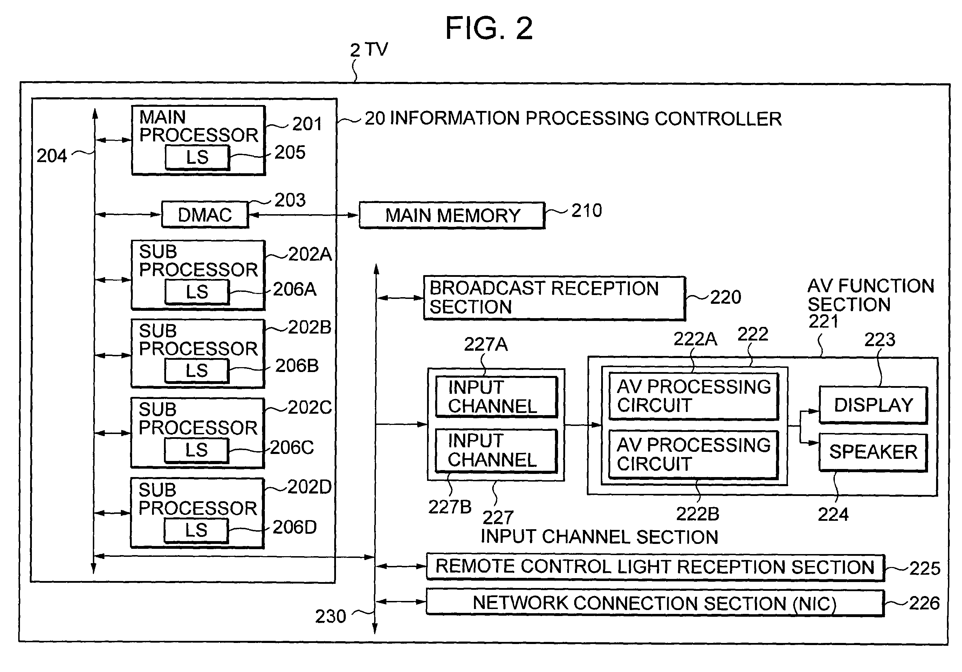

FIGS. 2 to 6 represent schematic configurations of the TV apparatus 2, DVD recorder 4, multiplayer 5, server 6, and remote controller 7, respectively.

As shown in FIG. 2, the TV apparatus 2 includes an information processing controller 20, a main memory 210, a broadcast reception section 220, an input channel section 227, an AV (Audio-Visual) function section 221, a remote control light reception section 225, a network connection section 226, and a system bus 230. The main memory 210 is connected directly to the information processing controller 20, and the broadcast reception section 220, input channel section 227, remote control light reception section 225, and network connection section 226 are connected to the information processing controller 40 through the system bus 230. Further, to the input channel section 227, there is further connected the AV function section 221.

The information processing controller 20 is a computer function section that controls the entire operation of the TV apparatus 2, and has a main processor 201, sub processors 202A to 202D, and a DMAC (Direct Memory Access Controller) 203 that are interconnected through an internal bus 204.

The main memory 210 is a memory formed from, e.g., a DRAM (Dynamic Random Access Memory) or the like shared among the main processor 201 and the sub processors 202A to 202D, and is configured to store various programs supervising functions of the TV apparatus 2 and data necessary for processing. Further, also the above-mentioned apparatus information held by each of the information processing apparatuses is configured to be recorded as an apparatus information table in an area in the main memory 210.

The main processor 201 performs schedule management of program execution (data processing) by the sub processors 202A to 202D, and general management of the information processing controller 20. However, the main processor 201 may be configured otherwise such that a program other than the program for performing the management operates in the main processor 201. In that case, the main processor 201 functions also as a sub processor. The main processor 201 has an LS (local storage) 205 as a temporary work memory.

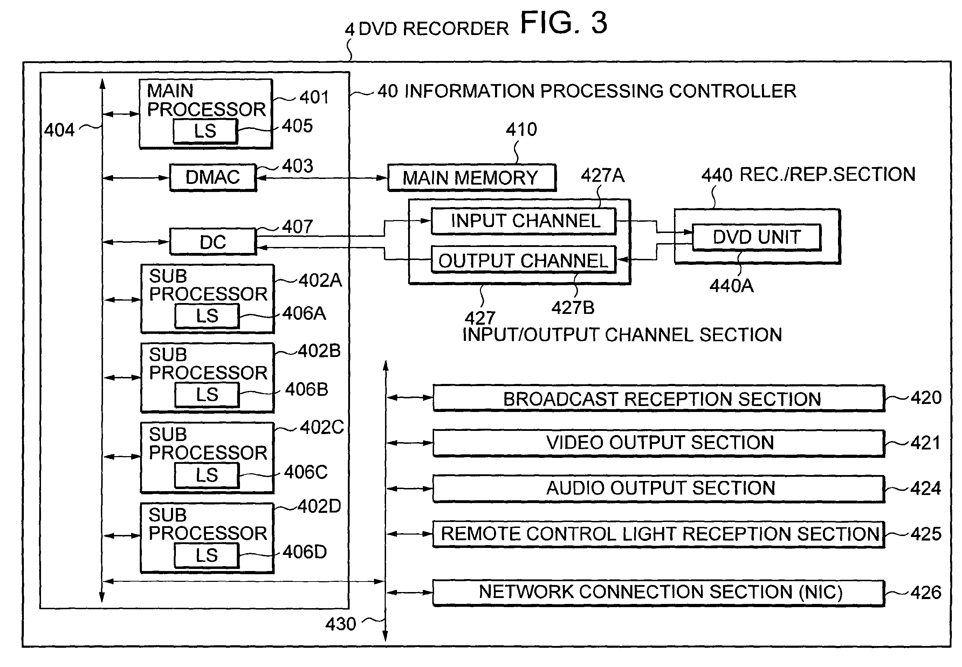

The sub processors 202A to 202D are configured to execute programs parallelly and independently of each other to process data under the control of the main processor 201. However, according to circumstances, it may be configured such that a program in the main processor 201 operates in cooperation with a program in any of the sub processors 202A to 202D. Also a function program hereinafter described is a program operating in the main processor 201. Also the sub processors 202A to 202D have LSs 206A to 206D, respectively. Note that a case where there are four sub processors is shown here, but that the number of sub processors may be other than that and this applies similarly to FIGS. 3 to 6 hereinafter described.

The DMAC 203 is connected between the internal bus 204 and the main memory 210, and the sub processors 202A to 202D access programs and data stored in the main memory 210 directly (without passing through the main processor 201), permitting DMA (Direct Memory Access) transfer of the programs and data.

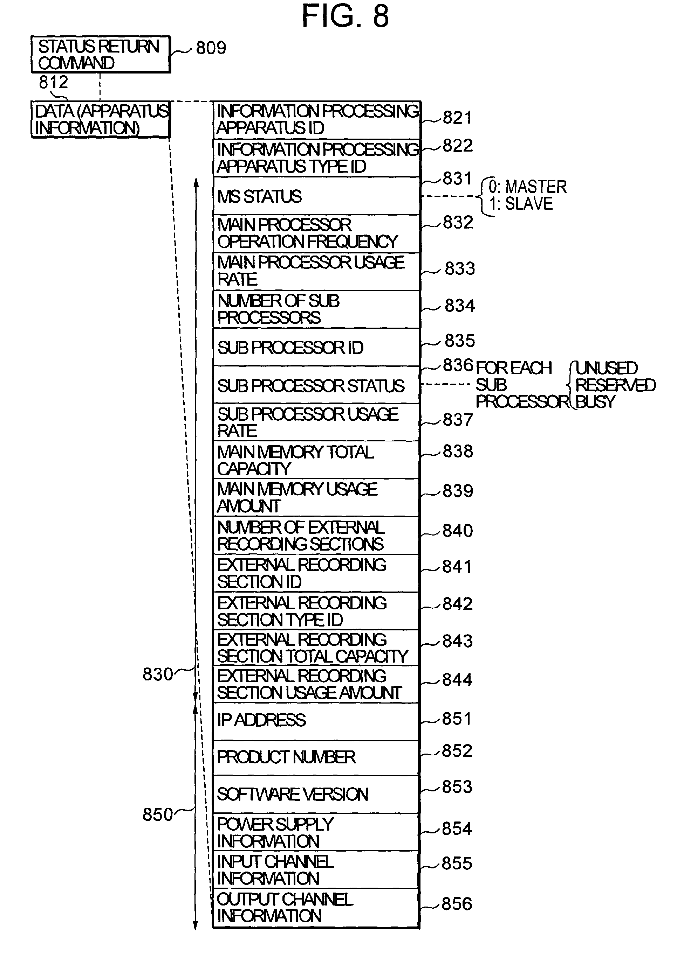

Here, an identifier is allocated to the information processing controller 20 as an information processing apparatus ID. The identifier allows the TV apparatus 2 to be uniquely identified throughout the network. Further, an identifier for specifying each of the sub processors 202A to 202D is similarly allocated thereto as a sub processor ID (see FIG. 8).

The broadcast reception section 220 has a tuner function that selectively receives an arbitrary one of many carrier frequencies of broadcast stations. The AV function section 221 includes a display 223 formed from, e.g., a LCD (Liquid Crystal Display), a plasma display, or the like, a speaker 224 that outputs sound, and an AV processing section 222 that controls these display 223 and the speaker 224. The AV processing section 222 includes, e.g., two AV processing circuits 222A, 222B. The remote control light reception section 225 receives a remote control infrared signal from a remote control transmitter, not shown.

The input channel section 227 provides ports through which data sent from other information processing apparatus to the AV processing section 222 is inputted, and is connected to the LAN cable 11 through the network connection section 226. This input channel section 227 has, e.g., two input channels 227A, 227B, each of which is managed in an abstracted manner by software (capacity exchange program hereinafter described).

The network connection section 226 is a LAN interface section which is a so-called NIC (Network Interface Card), and connects between the system bus 230 and the LAN cable 11.

Note that a description of the TV apparatus 3 is omitted since it has a configuration similar to that of the TV apparatus 2.

As shown in FIG. 3, the DVD recorder 4 includes an information processing controller 40, a main memory 410, an input/output channel section 427, a recording/reproduction section 440, a broadcast reception section 420, a video output section 421, an audio output section 424, a remote control light reception section 425, a network connection section 426, and a system bus 430. The main memory 410 and the input/output channel section 427 are connected directly to the information processing controller 40, and the broadcast reception section 420, video output section 421, audio output section 424, remote control light reception section 425, and network connection section 426 are connected to the information processing apparatus 40 through the system bus 430. Further, to the input/output channel section 427, there is further connected the recording/ reproduction section 440.

The information processing controller 40 has a main processor 401, sub processors 402A to 402D, a DMAC 403, and a DC (Disc Controller) 407 that are interconnected through an internal bus 404.

The main processor 401 of the information processing controller 40 has an LS 405 as a temporary work memory. Also the sub processors 402A to 402D have LS 406A to 406D, respectively. The DMAC 403 is connected between the internal bus 404 and the main memory 410.

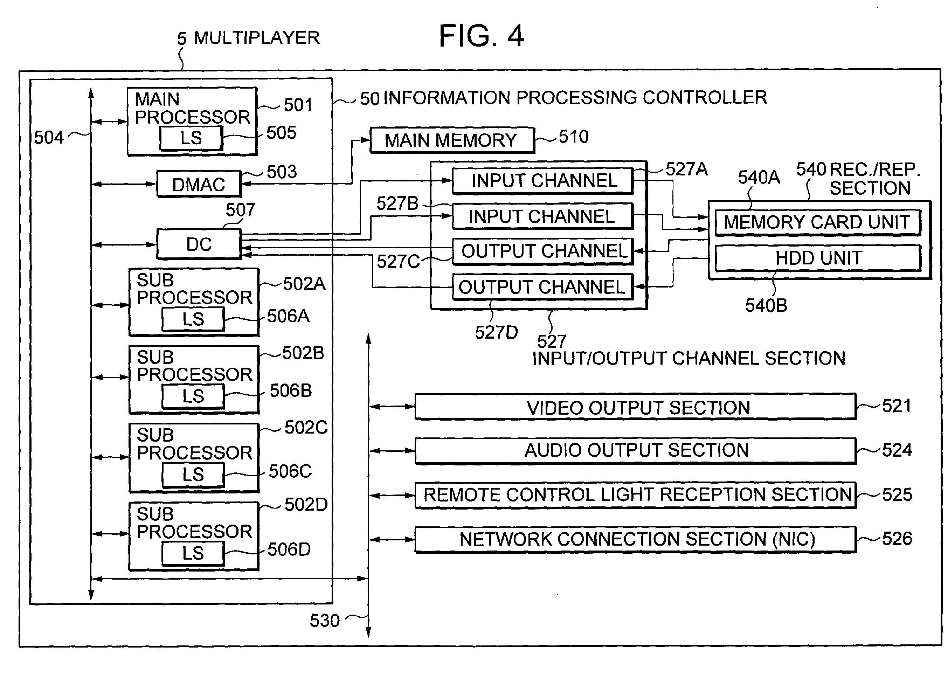

The DC 407 accesses the recording/reproduction section 440 connected through the input/output channel section 427. Therefore, the DC 407 is a recording/reproduction section controller although it is called the disc controller. Further, the information processing controller 40 may also be configured to connect to it a plurality of units in the recording/reproduction section 440, as in a schematic configuration of the multiplayer 5 of FIG. 4 hereinafter described.

The recording/reproduction section 440 is formed from a DVD (DVD ± RW (Digital Versatile Disc ± ReWritable)) unit 440A in an example of the DVD recorder 4 of FIG. 3. As a recording/ reproduction means applied to this recording/ reproduction section 440, various types can be used. For example, a fixed disk (hard disk), a removable disk, and further, optical disks, such as a MO (Magneto-Optical), CD ± RW (Compact Disc ± ReWritable) disks, and a memory disk, an SRAM (Static Random Access Memory) may also be used.

The input/output channel section 427 provides ports through which data is inputted/outputted between other information processing apparatus and the DVD unit 440A, and is connected to the LAN cable 11 through the DC 407 and the network connection section 426. Also this input/output channel section 427 is managed by software in an abstracted manner, similarly to the above-mentioned input channel 227. For example, in this case, the input/output channel section 427 has one input channel 427A and one output channel 427B.

The video output section 421 and the audio output section 424 process video data and audio data signaled from the information processing controller 40 to the system bus 430, and signal the video data and the audio data as they are or converted into analog signals, to the outside of the DVD recorder 4. Further, the network connection section 426 is a LAN interface section, and connects between the system bus 430 and the LAN cable 11.

As shown in FIG. 4, the multiplayer 5 has an information processing controller 50, a main memory 510, an input/output channel section 527, a recording/reproduction section 540, a video output section 521, an audio output section 524, a remote control light reception section 525, a network connection section 526, and a system bus 530. The main memory 510 and the input/output channel section 527 are connected directly to the information processing controller 50. Further, to the input/output channel section 527, there is further connected the recording/reproduction section 540.

The information processing controller 50 has a main processor 501, sub processors 502A to 502D, a DMAC 503, and a DC 507 which are interconnected through an internal bus 504.

The main processor 501 of the information processing controller 50 has an LS 505 as a temporary work memory. Also the sub processors 502A to 502D have LSs 506A to 506D, respectively. The DMAC 503 is connected between the internal bus 504 and the main memory 510.

The recording/reproduction section 540 is connected to the DC 507 through the input/output channel section 527, and has two units, which are a memory card unit 540A and a HDD (Hard Disk Drive) unit 540B. Further, as mentioned above, as a recording/reproduction means applied to this recording/reproduction section 540, various types may be used.

The input/output channel section 527 provides ports through which data is inputted/outputted between other information processing apparatus and the memory card unit 540A and the HDD (Hard Disk Drive) unit 540B, and is connected to the LAN cable 11 through the DC 507 and the network connection section 526. Also this input/output channel section 527 is managed by software in an abstracted manner. For example, in this case, the input/output channel section 527 has two input channels 527A, 527B, and two output channels 527C, 527D. As shown in FIG. 4, the multiplayer 5 has two input channels and two output channels. Where these four channels are used for different applications that have no relationship with each other, at least four processes must be executed simultaneously and independently by a single information processing apparatus which is the multiplayer 5. Even in such a case, since the multiplayer 5 has four sub processors as shown in FIG. 4, high speed execution can be implemented by allocating the processes to the sub processors, respectively. Further, as mentioned above, each sub processor can perform DMA transfer of programs or data with respect to the main memory 510 through the internal bus 504 and the DMAC 503. For example, let it be considered that data inputted through an input channel from another information processing apparatus is outputted through an output channel after two-stage processes are performed by two sub processors. In this case, intermediate-stage data must be exchanged between the two sub processors, but by performing DMA transfer of data through the main memory 510 twice, high speed exchange can be realized. As a result, the data inputted through the input channel can be outputted through the output channel in real-time.

The network connection section 526 is a LAN interface section, and connects between the system bus 530 and the LAN cable 11.

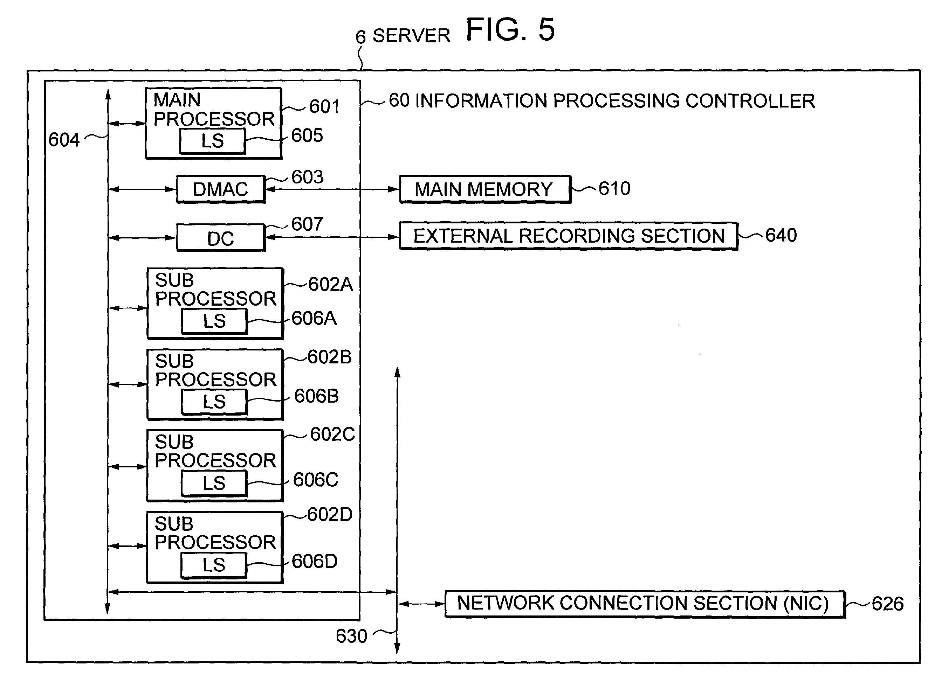

As shown in FIG. 5, the server 6 has an information processing controller 60, a main memory 610, an external recording section 640, a network connection section 626, and a system bus 630. The main memory 610 and the external recording section 640 are connected directly to the information processing controller 60, and the network connection section 626 is connected to the information processing controller through the system bus 630.

The information processing controller 60 has a main processor 601, sub processors 602A to 602D, a DMAC 603, and a DC 607 that are interconnected through the internal bus 604.

The main processor 601 of the information processing controller 60 has an LS 605 as a temporary work memory. Also the sub processors 602A to 602D have LSs 606A to 606D, respectively. The DMAC 603 is connected between the internal bus 604 and the main memory 610.

The external recording section 640 is connected to the DC 507. Further, as in the above-mentioned recording/reproduction sections 440, 540, various types can be used as a recording means applied to this external recording section 640.

The network connection section 626 is a LAN interface section, and connects between the system bus 630 and the LAN cable 11.

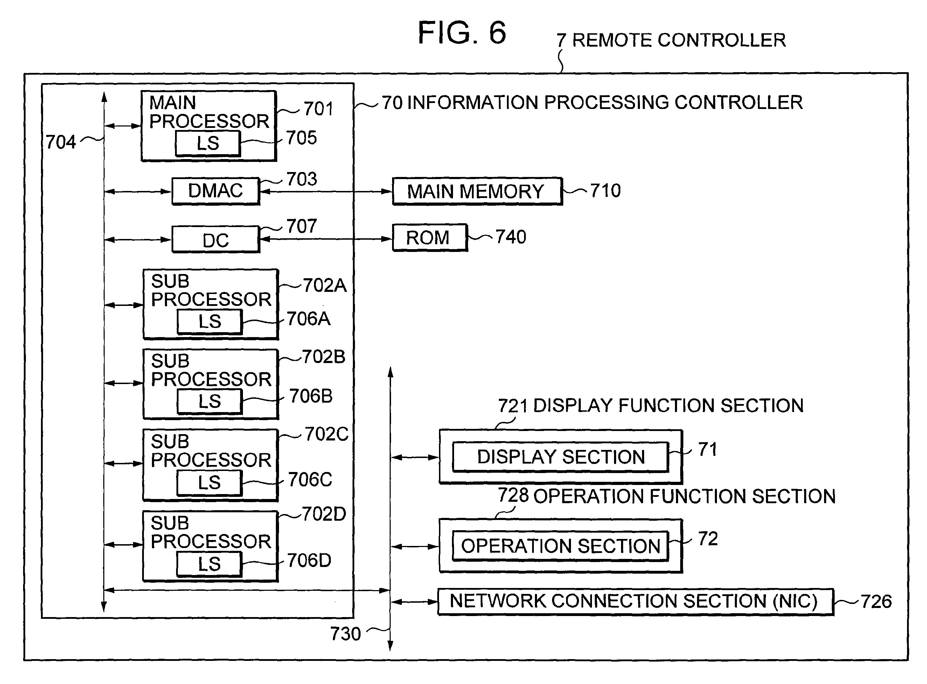

As shown in FIG. 6, the remote controller 7 includes an information controller 70, a main memory 710, a ROM (Read Only Memory) 740, a display function section 721, an operation function section 728, a network connection section 726, and a system bus 730. The main memory 710 and the ROM (Read Only Memory) 740 are connected directly to the information processing controller 70, and the display function section 721, operation function section 728, and network connection section 728 are connected to the information processing controller 70 through the system bus 730.

The information processing controller 70 has a main processor 701, sub processors 702A to 702D, a DMAC 703, and a DC 707 that are interconnected through the internal bus 704.

The main processor 701 of the information processing controller 70 has an LS 705 as a temporary work memory. Also the sub processors 702A to 702D have LSs 706A to 706D, respectively. The DMAC 703 is connected between the internal bus 704 and the main memory 710.

The ROM 740 is connected to the DC 707. Further, as in the above-mentioned recording/reproduction sections 440, 540, and external recording section 640, various types can be used in place of this ROM 740 (or in addition to the ROM 740).

The display function section 721 includes the above-mentioned display section 71 capable of displaying picture, textual information, and the like, and a processing circuit (not shown). The display section 71 is, specifically, a display panel formed from, e.g., an LCD, a plasma display, or the like.

The operation function section 728 includes the above-mentioned operation section 72 which the user operates when inputting information, and a processing circuit (not shown). The operation section 72 is, specifically, operation equipment formed from, e.g., a keyboard and the like.

The network connection section 726 is a LAN interface section, and connects between the system bus 730 and the LAN cable 11.

Note that the configuration of the respective information processing apparatuses 2 to 5, server 6, and remote controller 7 in the embodiment of the present invention is not limited to those shown in FIGS. 2 to 6. For example, the number of sub processors, and types of the recording/ reproduction sections, the external recording section do not matter. Further, e.g., the TV apparatus 2, 3 may have a recording/reproduction function for a recording medium, similarly to the DVD recorder 4 or the like. Or conversely, e.g., the DVD recorder 4 and the multiplayer 5 may have a video/audio display function, similarly to the TV apparatus 2, 3 or the like.

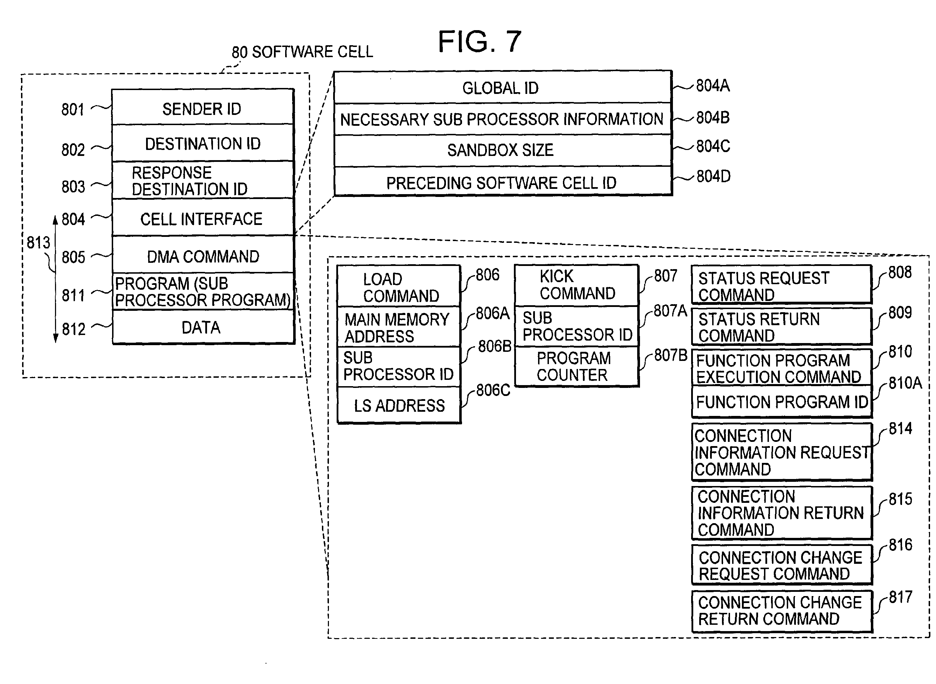

In the information processing system of the present embodiment, transmission/reception of apparatus information designating logical connection information held by each of the information processing apparatuses 2 to 5 is configured to be performed using a software cell, which is a control packet having a predetermined format as mentioned above. Specifically, it is configured such that the main processor included in the information processing controller in a certain information processing apparatus produces a software cell formed from data including a command, a program, apparatus information, and the like, for transmission/reception to/from other information processing apparatus through a network. Note that in FIGS. 7 to 9 below, each of the information processing apparatuses 2 to 5 is described simply as "an information processing apparatus". Further, the above-mentioned recording/reproduction sections 440, 540, external recording section 640, and ROM 740 are collectively described simply as "external recording section".

FIG. 7 represents an example of a configuration of the above-mentioned software cell. This software cell includes a sender ID 801, a destination ID 802, a response destination ID 803, a cell interface 804, a DMA command 805, a program (sub processor program) 811, and data 812 as a whole.

The sender ID 801 includes an IP address of an information processing apparatus which is a sender of the software cell and an information processing apparatus ID of the information processing controller in the information processing apparatus, and further, identifiers (sub processor IDs) of the respective sub processors included in the information processing controller in the information processing apparatus.

The destination ID 802 and the response destination ID 803 respectively include information about an information processing apparatus which is a destination of the software cell and an information processing apparatus which is a response destination of a result of execution of the software cell, which information is the same as that in the sender ID 801.

The cell interface is information necessary for utilizing the software cell, and includes a global ID 804A, necessary sub processor information 804B, a sandbox size 804C, and a preceding software cell ID 804D.

The global ID 804A allows unique identification of the software cell throughout the entire network, and is configured to be produced on the basis of the sender ID 801 and a date/time (date and time) of production or transmission of the software cell.

The necessary sub processor information 804B is configured to set therein the number of sub processors necessary for executing the software cell.

The sandbox size 804C is configured to set therein memory capacities in the main memory and the LS of each sub processor which are necessary for executing the software cell.

The preceding software cell ID 804D is an identifier of a preceding one of software cells belonging to one group that requires sequential execution of data such as streaming data.

An execution section 813 of the software cell is formed from a DMA (Direct Memory Access) command 805, a program 811, and data 812. The DMA command 805 includes a series of DMA commands necessary to start the program 811, and the program 811 includes sub processor programs to be executed by the sub processors. The data 812 here is data to be processed by the program including the sub processor programs.

The DMA command 805 includes a load command 806, a kick command 807, a status request command 808, a status return command 809, a function program execution command 810, a connection information request command 814, a connection information return command 815, a connection change request command 816, and a connection change return command 817.

The load command 806 is a command for loading information in the main memory into the LS of a sub processor, and includes, in addition to the load command itself, a main memory address 806A, a sub processor ID 806B, and an LS address 806C. The main memory address 806A indicates an address of a predetermined area in the main memory, from which the information is loaded. The sub processor ID 806B and the LS address 806C indicate an identifier of the sub processor and an address of the LS, to which the information is loaded.

The kick command 807 is a command for starting execution of a program, and includes, in addition to the kick command itself, a sub processor ID 807A and a program counter 807B. It is configured such that the sub processor ID 807A identifies a sub processor for kicking, and the program counter 807B provides an address for a program counter for execution of the program.

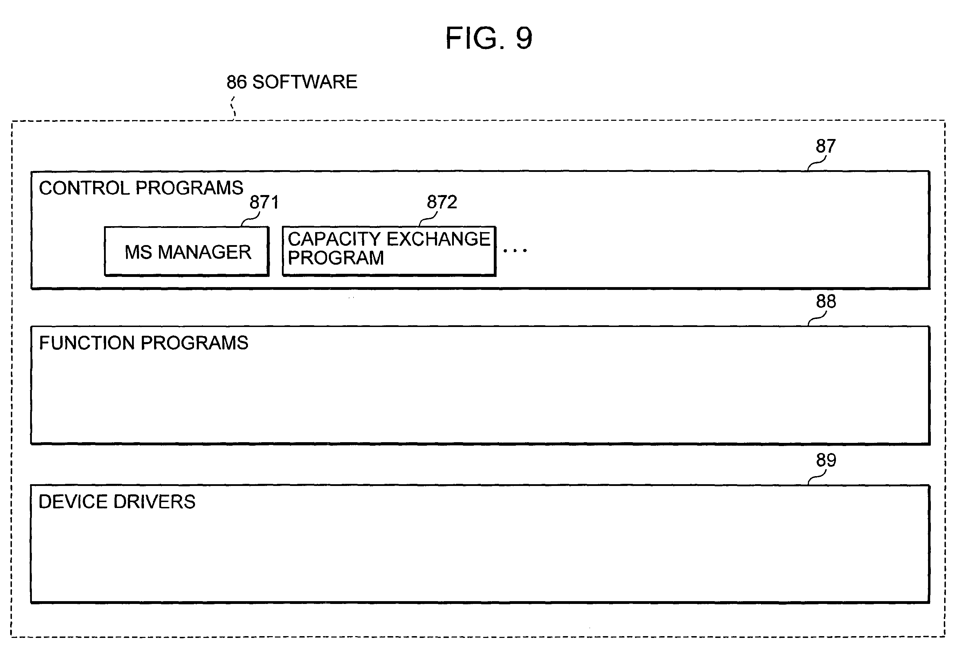

The function program execution command 810 is a command by which a certain information processing apparatus requests another information processing apparatus to execute a function program. It is configured such that the information processing controller in an information processing apparatus having received the function program execution command identifies a function program to be started from a function program ID 810A. While the function program is hereinafter described, it is a program that is categorized into a function program in a configuration diagram shown in FIG. 9 of software stored in the main memory of an information processing controller. The function program is configured to be loaded into the main memory and executed by the main processor.

The status request command 808 is a command by which it is requested that apparatus information about an information processing apparatus indicated by the destination ID 802 be transmitted to an information processing apparatus indicated by the response destination ID 803. Further, the status return command 809 is a command by which the information processing apparatus having received the above-mentioned status request command 808 responds, with its apparatus information, to the information processing apparatus indicated by the response destination ID 804 that is included in the status request command 808. The status return command 809 is configured to store the apparatus information into the data area of the execution section.

The connection information request command 814 is a command for requesting information about connection as hereinafter described, and the connection information return command 815 is a command for responding to the connection information request command 814. Further, the connection change request command 816 is a command for requesting change of the connection as hereinafter described, and the connection change return command 817 is a command for responding to the connection change request command 816.

FIG. 8 represents an example configuration of data in the status return command 809. As mentioned above, it indicates apparatus information about the information processing apparatus having received the status request command 808, i.e., the information processing apparatus that transmits the status return command 809. This apparatus information includes an information processing apparatus ID 821 and an information processing apparatus type ID 822, and additionally, a basic information section 830, and an additional information section 850.

The basic information section 830 has an MS status 831, a main processor operation frequency 832, a main processor usage rate 833, the number of sub processors 834, a sub processor ID 835, a sub processor status 836, a sub processor usage rate 837, a main memory total capacity 838, a main memory usage amount 839, the number of external recording sections 840, an external recording section ID 841, an external recording section type ID 842, an external recording section total capacity 843, and an external recording section usage amount 844.

The additional information section 850 has an IP address 851, a product number 952, a software version 853, power supply information 854, input channel information 855, and output channel information 856.

The information processing apparatus ID 821 is an identifier for identifying an information processing controller in an information processing apparatus, and indicates the information processing apparatus that transmits the status return command 809. The information processing apparatus ID 821 is configured to be produced by the main processor included in the information processing controller in the information processing apparatus when the power is supplied. Specifically, e.g., it is produced on the basis of a date/time at which the power is supplied, the IP address of the information processing apparatus, the number of sub processors included in the information processing controller in the information processing apparatus, and the like.

The information processing apparatus type ID 822 includes a value representative of a characteristic of the information processing apparatus. In the case of the present embodiment, the characteristic of the information processing apparatus is, e.g., a TV apparatus, a DVD recorder, a multiplayer, and the like. Further, the information processing apparatus type ID may also be of a type representing a function of the information processing apparatus, such as video/audio recording or video/audio reproduction. Furthermore, the value representative of a characteristic or a function of an information processing apparatus is determined in advance, and it is configured such that the characteristic or the function of the information processing apparatus can be grasped on the basis of the information processing apparatus type ID 822.

The MS (Master/Slave) status 831 represents which one of a master apparatus and a slave apparatus the information processing apparatus is operating as, as hereinafter described. Specifically, e.g., where the MS status is set to 0, it indicates that the information processing apparatus is operating as a master apparatus, and where the MS status is set to 1, it indicates that the information processing apparatus is operating as a slave apparatus.

The main processor operation frequency 832 represents an operation frequency of the main processor in the information processing controller. Further, the main processor usage rate 833 represents a usage rate in the main processor of all of programs currently operating in the main processor. The main processor usage rate 833 is a value representing the ratio of the processing capacity being currently used to the total processing capacity of the main processor of interest, and is calculated, e.g., in a unit of MIPS (Million Instructions Per Second), which is a unit for evaluation of the processor processing capacity, or on the basis of a processor utilization time per unit time. This similarly applies also to the sub processor usage rate 837 hereinafter described.

The number of sub processors 834 represents the number of sub processors included in the information processing controller. The sub processor ID 835 is an identifier for identifying each of the sub processors in the information processing controller.

The sub processor status 836 represents a status of each sub processor, and includes an "unused" status, a "reserved" status, a "busy" status, and the like. The "unused" status indicates that the sub processor is neither used at present nor reserved for use. The "reserved" status indicates that the sub processor is not used at present but reserved for use. The "busy" status indicates that the sub processor is currently used.

The sub processor usage rate 837 represents a usage rate in the sub processor of a program being executed by the sub processor or being reserved for execution in the sub processor. That is, the sub processor usage rate 837 indicates a current usage rate where the sub processor status 836 is "busy", and indicates an estimated usage rate under which the sub processor is planned to be used later where the sub processor status 836 is "reserved".

A set of the sub processor ID 835, sub processor status 836, and sub processor usage rate 837 is set to one sub processor, and thus, as many sets as the number of sub processors in one information processing controller are set.

The main memory total capacity 838 and the main memory usage amount 839 represent a total capacity and a capacity being currently used of the main memory connected to the information processing controller, respectively.

The number of external recording sections 840 represents the number of external recording sections connected to the information processing controller. The external recording section ID 841 is information for uniquely identifying an external recording section connected to the information processing controller. The external recording section type ID 841 represents a type of the external recording section (e.g., a hard disk, a CD ± RW, a DVD ± RW, a memory disk, an SRAM, a ROM, or the like). Further, the external recording section total capacity 843 and the external recording section usage amount 844 represent a total capacity and a currently used capacity of an external recording section identified by the external recording section ID 841, respectively.

A set of the external recording section ID 841, external recording section type ID 842, external recording section total capacity 843, and external recording section usage amount 844 is set to one external recording section, and thus, as many sets as the number of external recording sections connected to the information processing controller are set.

The IP address 851 represents an IP address corresponding to each of the information processing apparatus, to the letter, and also the product number 852 represents a product number of the information processing apparatus.

The software version 853 represents software version numbers of a capacity exchange program and an MS manager hereinafter described, which are software held by each information processing apparatus. Further, the power supply information 854 represents information about whether or not the power supply of each information processing apparatus is ON or OFF. Where the power supply is ON, it is set to 1, and where the power supply is OFF, it is set to 0, for example.

The input channel information 855 and the output channel information 856 include the number of input channels and output channels, usage situations of each of the channels, whether it is busy or unused, and attribute information about the individual channels (e.g., video output, audio input, and the like). Further, where the channel is busy, it is configured to include channel information about a connection destination which is the other party for communication, and an information processing apparatus ID 821 of another information processing apparatus that includes the channel which is the connection destination.

As described above, while example configurations of the software cell transmitted between the information processing apparatuses has been described with reference to FIGS. 7 and 8, example configurations of the software cell in the embodiment of the present invention are not limited to these, but may be set freely in a manner tailored to objects and intended use of the user.

FIGS. 9 to 14 represent examples of software configurations which the apparatus of the information processing system shown in FIG. 1 hold, respectively.

First, FIG. 9 represents an example of a basic configuration of software held by an information processing apparatus. These pieces of software (programs) are configured to be recorded on an external recording section connected to the information processing controller before the power is supplied to the information processing apparatus.

As shown in FIG. 9, software 86 is categorized into control programs 87, function programs 88, and device drivers 89 according to their function or characteristic.

The control programs 87 are software having a function of controlling and managing the entire configuration of the information processing system, and are executed by the main processor of each information processing controller. For example, as shown in FIG. 9, the control programs 87 include a MS manager 871 and a capacity exchange program 872. The MS manager 871 has a function of setting information about whether each of the information processing apparatuses is a master apparatus or a slave apparatus as hereinafter described. Further, also the capacity exchange program 872 has a function of acquiring apparatus information held by each of the information processing apparatuses as hereinafter described. Furthermore, here, it is configured such that the user can grasp version information about these pieces of software by the software version 853 as mentioned above.

The function programs 88 are software having a function responsible for performing processing operation in each of the information processing apparatuses, and are executed by the main processor, and are configured to include, e.g., a recording program, a reproduction program, and a material search program, which are provided for each information processing controller in a manner corresponding to each information processing apparatus.

The device drivers 89 are software for input and output (transmission and reception) of each information processing controller, and are configured to include, e.g., a broadcast reception driver, a monitor output driver, a bit steam input/output driver, a network input/output driver, which are provided for each information processing controller in a manner corresponding to each information processing apparatus.

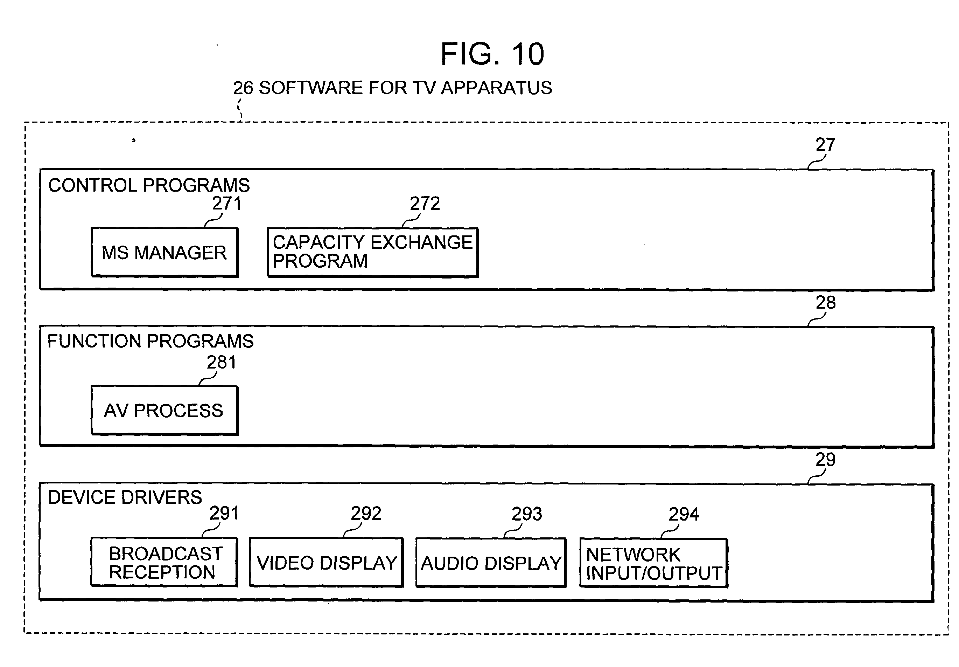

Next, FIG. 10 represents an example of a software configuration of the TV apparatus 2 shown in FIG. 1. As shown in the figure, software 26 of the TV apparatus 2, e.g., includes an MS manager 271 and a capacity exchange program 272 as control programs 27, includes an AV processing program 281 as a function program 28, and includes a broadcast reception driver 291, a video display driver 292, an audio display driver 293, and a network input/output driver 294 as device drivers 29.

Note that the TV apparatus 3 has a software configuration similar to that of the TV apparatus 2, and thus a description thereof is omitted.

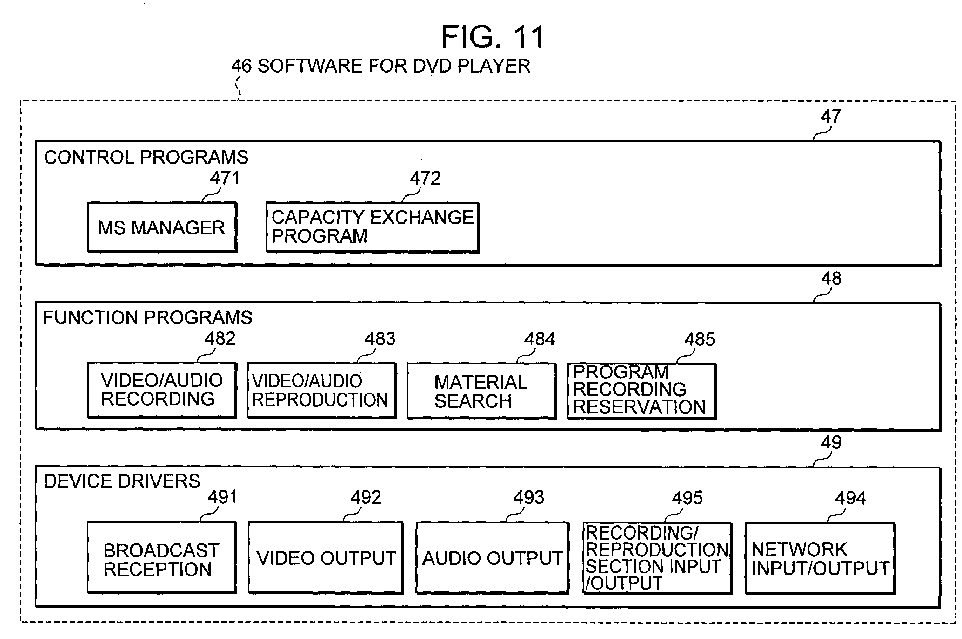

FIG. 11 represents an example of a software configuration of the DVD recorder 4 shown in FIG. 1. As shown in the figure, software 46 of the DVD recorder 4, e.g., includes an MS manager 471 and a capacity exchange program 472 as control programs 47, includes a video/audio recording program 482, a video/audio reproduction program 483, a material search program 848, and a program recording reservation program 485 as function programs 48, and includes a broadcast reception driver 491, a video output driver 492, an audio output driver 493, a recording/reproduction section input/output driver 495, and a network input/output driver 494 as the device drives 49.

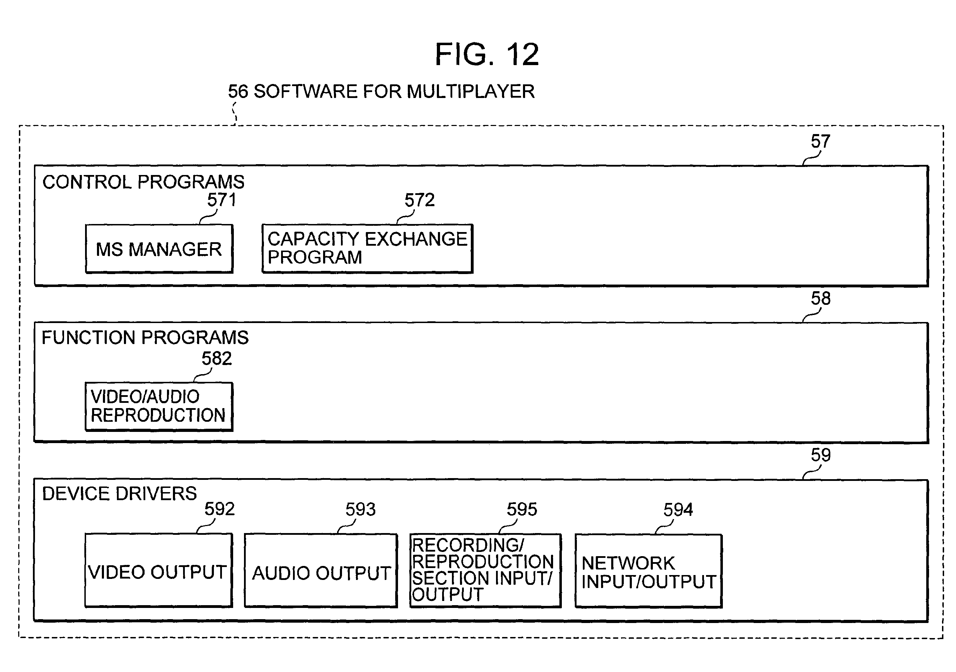

FIG. 12 represents an example of a software configuration of the multiplayer 5 shown in FIG. 1. As shown in the figure, software 56 of the multiplayer 5, e.g., includes an MS manager 571 and a capacity exchange program 572 as control programs 57, includes a video/audio reproduction program 582 as a function program 58, and includes a video output driver 592, an audio output driver 593, a recording/reproduction section input/output driver 595, and a network input/output driver 594 as the device drives 59.

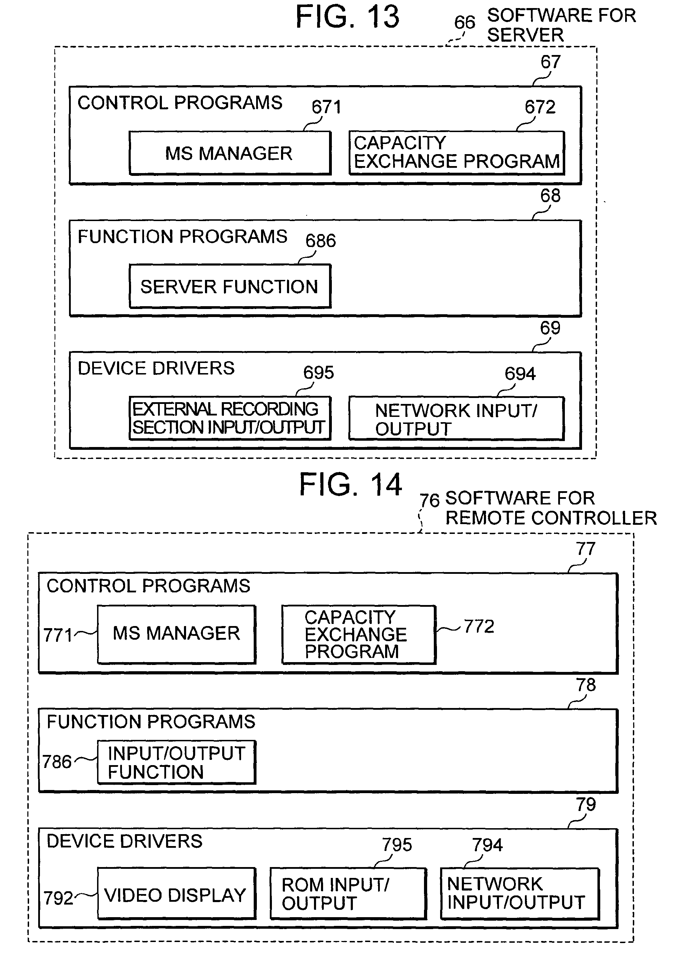

FIG. 13 represents an example of a software configuration of the server 6 shown in FIG. 1. As shown in the figure, software 66 of the server 6, e.g., includes an MS manager 671 and a capacity exchange program 672 as control programs 67, includes a server function program 686 as a function program 68, and includes an external recording section input/output driver 695 and a network input/output driver 694 as the device drives 69.

FIG. 14 represents an example of a software configuration of the remote controller 7 shown in FIG. 1. As shown in the figure, software 76 of the remote controller 7, e.g., includes an MS manager 771 and a capacity exchange program 772 as control programs 77, includes an input/output function program 786 as a function program 68, and includes a video display driver 792, a ROM input/output driver 795, and a network input/output driver 794 as the device drives 79.

Note that the examples of software configurations in the embodiment of the present invention shown in FIGS. 9 to 14 are not limited to these, but may be set freely in a manner tailored to objects and intended use of the user.

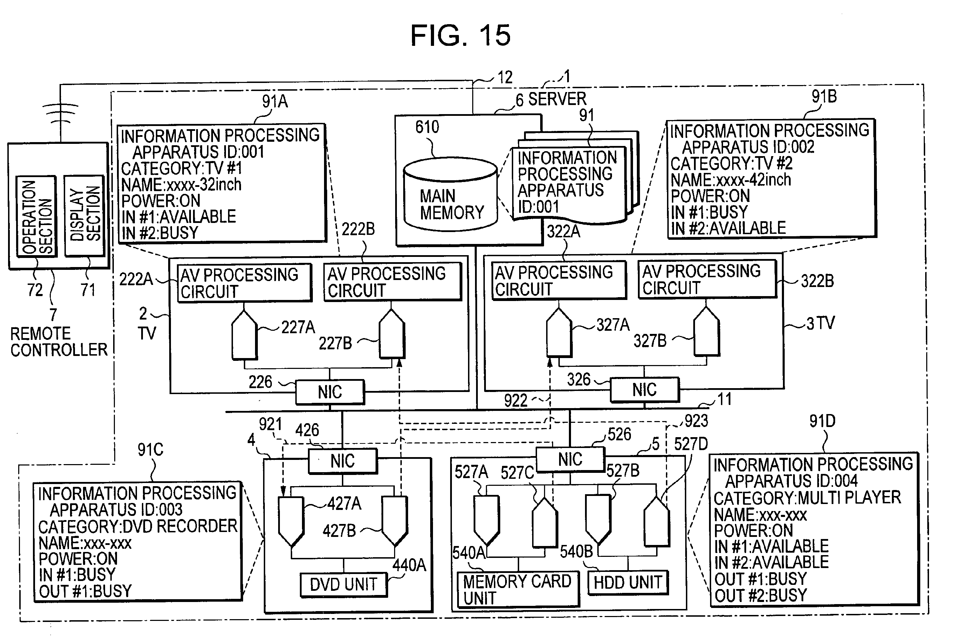

FIG. 15 represents by abstraction a main portion of a configuration of each of the information processing apparatuses in the information processing system of FIG. 1. Similarly to FIG. 1, the LAN cable 11 is connected between the plurality of information processing apparatuses 2 to 5 and the server 6, and further, the remote controller 7 is connectable through the wireless communication path 12.

In FIG. 15, as to the TV apparatus 2, only the two input channels 227A, 227B, two AV processing circuits 222A, 222B, and NIC 226 are shown, and as to the TV apparatus 3, only the two input channels 327A, 327B, two AV processing circuits 322A, 322B, and NIC 326 are shown. As to the DVD recorder 4, only the one input channel 427A, one output channel 427B, one DVD unit 440A, and NIC 426 are shown, and as to the multiplayer 5, only the two input channels 527A, 527B, two output channels 527C, 527D, memory card unit 540A, HDD unit 540B, and NIC 526 are shown. As to the server 6, only the main memory 610 is shown, and as to the remote controller 7, only the display section 71 and operation section 72 are shown.

Also in FIG. 15, the TV apparatus 2 holds, as apparatus information 91A mentioned above, the information processing apparatus ID 821, information about category (information processing apparatus type ID 822), name (product number 852), power supply (power supply information 854), and two input channels (input channel information 855); the TV apparatus 3 holds, similarly as apparatus information 91B, the information processing apparatus ID, information about the category, name, power supply, and two input channels; the DVD recorder 4 holds, similarly as apparatus information 91C, the information processing apparatus ID, information about the category, name, power supply, and one input channel, and one output channel (output channel information 856); and the multiplayer 5 holds, similarly as apparatus information 91D, the information processing apparatus ID, information about the category, name, power supply, and two input channels, and two output channels. Further, FIG. 15 also indicates that the server 6 manages the apparatus information 91A to 91D held by the respective information processing apparatuses 2 to 5 intensively as total apparatus information 91.

Note that FIG. 15 schematically shows also how data is exchanged between the input/output channels included in the respective information processing apparatuses 2 to 5, i.e., examples 921 to 923 of logical connections. Specifically, the logical connection 921 shows a state wherein data is signaled from the output channel 527C of the multiplayer 5 to the input channel 427A of the DVD recorder 4; the logical connection 922 shows a state wherein data is signaled from the output channel 427C of the DVD recorder 4 to the input channel 327A of the TV apparatus 3; and a logical connection 923 shows a state wherein data is signaled from the output channel 527D of the multiplayer 5 to the input channel 227B of the TV apparatus 2.

The input channels 227A, 227B, 327A, 327B, 427A, 527A, 527B represent input channels included in the information processing apparatuses 2 to 5, and are connected to the AV processing circuit 222A and NIC 226, the AV processing apparatus 222B and NIC 226, the AV processing circuit 322A and NIC 326, the AV processing circuit 322B and NIC 326, the DVD unit 440A and NIC 426, the memory card unit 540A and NIC 526, and the HDD unit 540B and NIC 526 in the information processing apparatus, respectively. Further, these input channels are configured to be managed by abstraction by software (capacity exchange program) as mentioned above.

The output channels 427B, 527C, 527D represent output channels included in the information processing apparatuses 2 to 5 (the DVD recorder 4 and the multiplayer 5 in the case of the present embodiment), and are connected to the DVD unit 440A and NIC 426, the memory card unit 540A and NIC 526, and the HDD unit 540B and NIC 526 in the information processing apparatus, respectively. Further, also these output channels are similarly configured to be managed by abstraction by software (capacity exchange program).

The main memory 610 included in the server 6 is included in the server 6 as mentioned above, and the total apparatus information 91 is configured to be managed intensively in the main memory 610 of this server. Further, the display section 71 included in the remote controller 7 has a visual display function as mentioned above, and also, the operation section 72 has a function of receiving operation from the user as mentioned above.

The NICs 226, 326, 426, 526 correspond to the network connection sections included in the above-described information processing apparatus, respectively, and play the role of connecting between the information processing apparatus and the LAN cable 11. Each circuit unit is configured to exchange data through the corresponding NIC. Further, as hereinafter described, the NICs are configured to perform, e.g., a time-division multiplexing process as to exchange of data between a plurality of input channels and output channels.

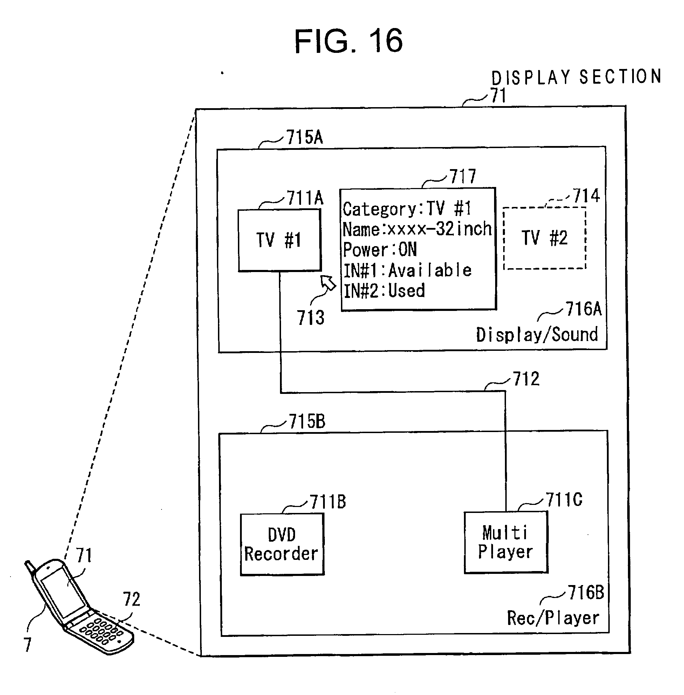

FIG. 16 represents an example of display on the display section 71 of the remote controller 7 of FIG. 1. The display section 71 displays a plurality of apparatus objects 711A to 711C, a virtual connection line 712, a cursor 713, an inactive apparatus object 714, category windows 715A to 715B and 716A to 716B, and a chip inspect window 717.

The apparatus objects 711A to 711C and the inactive object 714 represent by abstraction the information processing apparatuses 2, 4, 5, and 3 of FIG. 1, respectively, and represent the information processing apparatuses themselves which are connected to the network. Further, icons displaying these apparatus objects 711A to 711C and inactive apparatus object 714 are configured such that their display can be changed freely so as to be more user-friendly according to the apparatus information 91A to 91D held by the corresponding information processing apparatus (e.g., the information processing apparatus ID 821, product number 852, information processing apparatus type ID 822 (e.g., the TV apparatus, DVD recorder, multiplayer, and the like) and the like).

The virtual connection line 712 is a line obtained by abstracting logical connection situations between the input/output channels included in the information processing apparatuses 2, 4, 5 respectively corresponding to the apparatus objects 711A to 711C for visual representation. Further, this virtual connection line 712 is configured not only to be displayed in real-time according to a current connection situation, but also, as hereinafter described, to allow the user to interconnect apparatus objects by directly using the cursor 713 so that the interconnection can be reflected on the actual logical connection between the input/output channels included in the information processing apparatuses 2, 4, 5.

The cursor 713 is provided to select the icons corresponding to the apparatus objects 711A to 711C, the virtual connection line 712, and the like. This cursor 713 is configured for free movement when the user operates the operation section 72 included in the remote controller 7 or directly taps the display section 71.

The inactive apparatus object 714 is displayed so as to be visually distinguished from the above-mentioned active apparatus objects 711A to 711C so that the user can determine that the power supply of the information processing apparatus corresponding to the apparatus object is OFF. As a result, the user can grasp the current state of the apparatus object, whether it is active or inactive, instinctively and easily.

The category windows 714A to 714B and 716A to 716B allow one or more apparatus objects to be categorized according to the characteristics of the information processing apparatuses 2 to 5 (e.g., as the window 716A in FIG. 16, the category 715A whose characteristic is Display/Sound (image and audio) 716A, and as the window 716B, the category 715B whose characteristic is Rec/Player (recording and reproduction) 716B, and the like). As a result, e.g., even if many apparatus objects are displayed on the display section 72, the user can display them by categorizing them so as to be easily recognizable, whereby the user can grasp the connection situations of the respective information processing apparatus instinctively and easily.

The chip inspect window 717 is configured to be displayed when the cursor 713 is moved onto an apparatus object. As a result, the user can view detailed information about the information processing apparatus corresponding to the apparatus object, i.e., apparatus information 91A to 91D, and the like. Further, the detailed information includes, e.g., the category (e.g., the TV apparatus, DVD recorder, multiplayer, and the like) corresponding to the information processing type ID 822), name (product number 852), power (power supply information 854) of the information processing apparatus, connection information (input channel information 855 and output channel information 856) of the input/output channels included in each of the information processing apparatus, as shown in, e.g., FIG. 16.

Note that apparatus information displayed in this chip inspect window 717 is not limited to information shown in an example of FIG. 16, but, e.g., the information processing apparatus ID 821, MS status 831, IP address 851, or the like of the information processing apparatus may also be displayed. Further, the apparatus information for display may come in, e.g., a simple version and a detailed version to be properly used.

Next, an operation of the information processing system having the above-described configuration will be described.

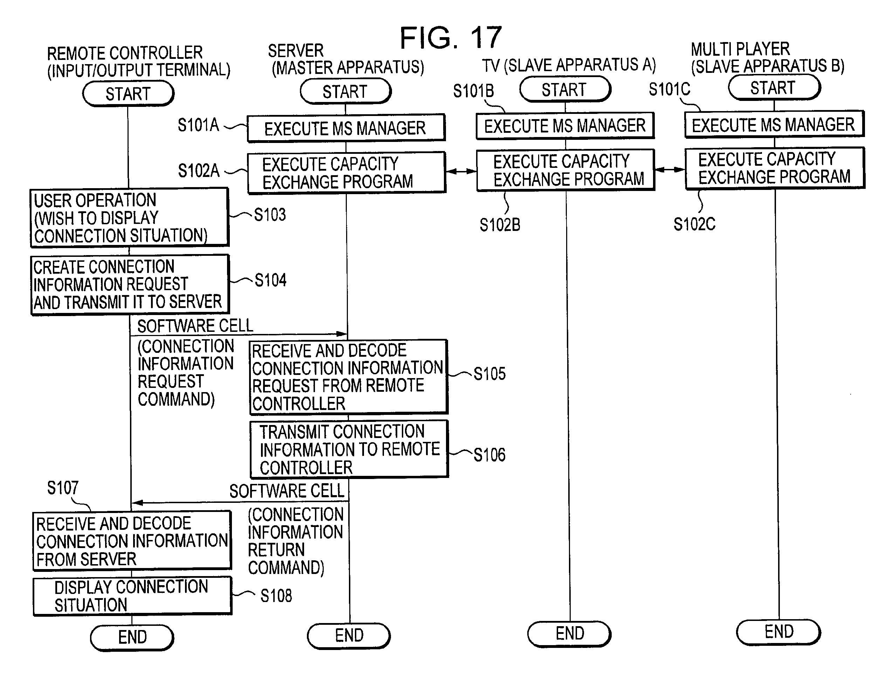

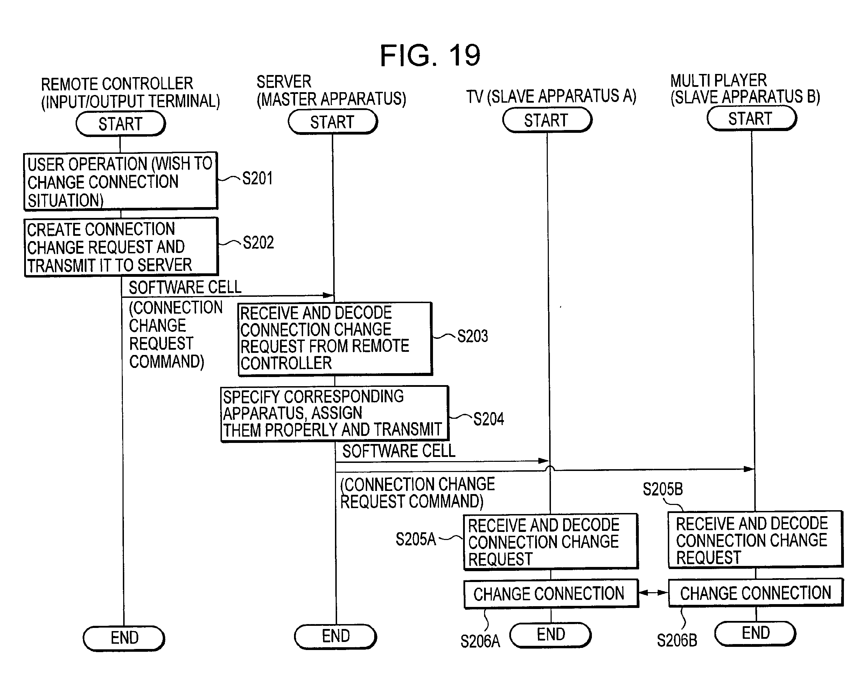

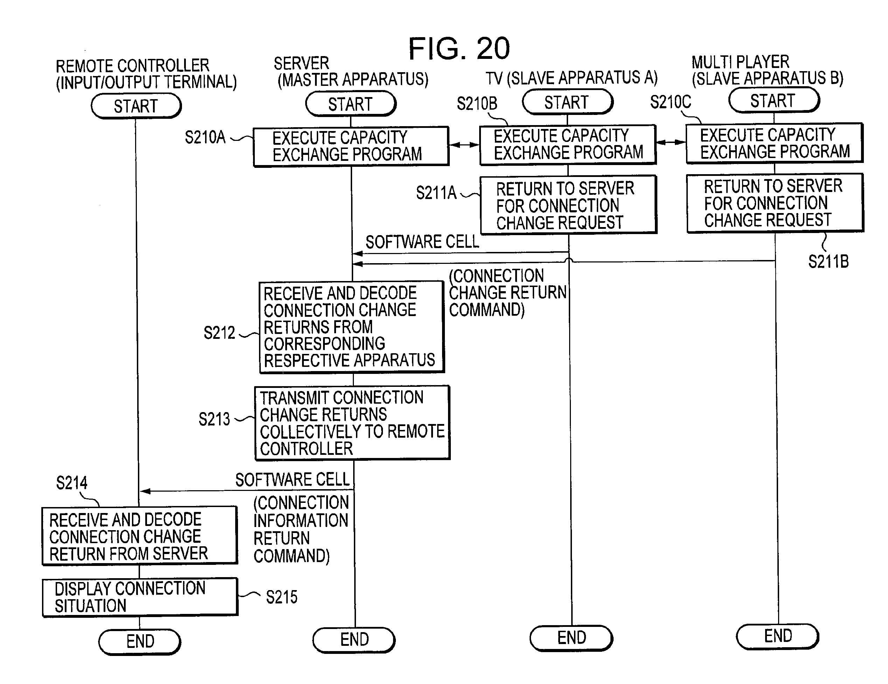

First, referring to FIG. 17, in the information processing system according to the present embodiment, determination of the configurations of the master apparatus and a slave apparatus, and a basic operation in steps S101 to S102 in FIG. 17 as to acquisition of apparatus information held by each of the information processing apparatuses will be described. FIG. 17 represents a process for a visual display on the display section 71 of the remote controller 7, and shows a flow diagram for the remote controller 7 functioning as an input/output terminal, the server 6 functioning as the master apparatus, and the TV apparatus 2 and the multiplayer 5 functioning as slave apparatus in the embodiment of the present invention. Note that a flow diagram for the TV apparatus 3 and the DVD recorder 4 functioning as slave apparatus is not shown. It is omitted because their operation is similar to that of a slave apparatus A (TV apparatus 2) and a slave apparatus B (multiplayer 5). This applies similarly to FIGS. 19 and 20 hereinafter described.

First, to start the process, in the above-described information processing system, when the main power is supplied when the server 6 and the information processing apparatuses 2 to 5 are physically connected to the network by, e.g., inserting cables, and thus connected to the network electrically and functionally, the main processors of the information processing controllers of the server 6 and the information processing apparatuses 2 to 5 load their MS managers belonging to the control programs and their respective programs belonging to the device drivers into the corresponding main memories, respectively.

As a loading procedure, the main processor first causes the DC to execute a reading out instruction to read out the programs from the external recording section, and then causes the DMAC to execute a writing instruction to write the programs into the main memory.

Here, the programs belonging to the function programs may be configured such that only a necessary one of the programs is loaded when necessary, or otherwise such that all of them are loaded immediately after the main power is supplied similarly to the programs belonging to the other categories.

Further, the programs belonging to the function programs need not necessarily be recorded on the external recording sections of all of the information processing apparatuses 2 to 5 connected to the network, but as long as they are recorded in an external recording section of any one of the information processing apparatuses, they can be loaded from another information processing apparatus using a software cell.

After having loaded the respective programs into the main memory in this manner, the server 6, TV apparatus 2, TV apparatus 3, DVD recorder 4, and multiplayer 5 execute those MS managers 671, 271, 371, 471, 571, respectively in steps S101A to S101C. When each of the MS managers detects the connection to the network of the information processing apparatus in which it operates, it confirms the presence of the other information processing apparatus connected to the same network. The "connection" or "presence" here means the connection to the network of each of the information processing apparatuses not only physically but also electrically and functionally, as mentioned above.

A method by which the MS manager confirms the presence of other information processing apparatus connected to the same network is described in the following. Note that the information processing apparatus in which the MS manager itself operates is hereinafter referred to as "self apparatus", and any other information processing apparatus is referred to as "different apparatus".

Each of the MS managers 671, 271, 371, 471, 571 produces a software cell that designates the status request command 808 as the DMA command 805, and designates the self apparatus as the sender ID 801 and the response destination ID 803, but does not specify the destination ID 802, for transmission to the network to which the information processing apparatus is connected, and sets a timer for network connection confirmation. The timeout time of the timer is, e.g., 10 minutes.

Where a different apparatus is connected on the network, the different apparatus receives the above-mentioned software cell including the status request command as the DMA command, and transmits a software cell that designates the status return command 809 as the DMA command 805 and includes apparatus information about itself (the different apparatus) as the data, to the above-mentioned information processing apparatus which is specified by the response destination ID and which has transmitted the status request command. The software cell whose DMA command is the status return command includes at least information for specifying the different apparatus (information processing apparatus ID 821, information 832 to 833 regarding the main processor, information 834 to 837 regarding the sub processor(s), or the like), and the MS status 831 of the different apparatus.

The MS manager of the information processing apparatus having issued the software cell whose DMA command is the status request command supervises reception of the software cell whose DMA command is the status return command to be transmitted from the different apparatus on the network until timeout occurs with the above-mentioned timer for network connection confirmation. As a result, where the status return command designating the MS status = 0 (master apparatus) is received, the MS status in the apparatus information table of the self apparatus is set to 1. Consequently, the apparatus functions a slave apparatus.

On the other hand, where no software cell whose DMA command is the status return command is received within the time until timeout occurs with the above-mentioned timer for network connection confirmation, or where a software cell in which the MS status = 0 (master apparatus) is not received, the MS status in the apparatus information table of the self apparatus is set to 0. Consequently, the apparatus functions a master apparatus.

That is, when a new information processing apparatus is connected to the network in a state wherein no apparatus is connected to the network or in a state wherein a master apparatus does not exist on the network, the apparatus is automatically set as a master apparatus. On the other hand, when a new information processing apparatus is connected to the network in a state wherein a master apparatus exists already on the network, the apparatus is automatically set as a slave apparatus.

Here, in any of the master apparatus and slave apparatus, the MS manager periodically transmits a software cell whose DMA command is the status request command to a different apparatus on the network to inquire about status information to supervise the situation of the different apparatus.

As a result, when the connection state of the network undergoes a variation such as when the main power supply to an information processing apparatus connected to the network is cut or an information processing apparatus is disconnected from the network and consequently the status return command 809 is not returned from the particular different apparatus within a predetermined period of time set in advance, or when a new information processing apparatus is connected to the network, the information is conveyed to a capacity exchange program.

In the above manner, the server 6 is set so as to function as the master apparatus, and the TV apparatus 2, TV apparatus 3, DVD recorder 4, and multiplayer 5 are set so as to function as slave apparatus in step S101.

Next, when each of the main processors 601, 201, 301, 401, 501 of the server 6, TV apparatus 2, TV apparatus 3, DVD recorder 4, and multiplayer 5 receives, from the MS manager of the self apparatus, a notification of an inquiry about a different apparatus on the network and completion of setting of the MS status 831 of the self apparatus, it execute its capacity exchange programs 672, 272, 372, 472, or 572 in steps S102A to S102C.

Each of the capacity exchange programs acquires, where the self apparatus is a master apparatus, apparatus information about all of the different apparatus connected to the network, i.e., apparatus information about the respective slave apparatus. That is, in the case of the present embodiment, the server 6 acquires the apparatus information about the TV apparatus 2, TV apparatus 3, DVD recorder 4, and multiplayer 5.

The acquisition of apparatus information about a different apparatus is performed, as described above, such that a software cell whose DMA command 805 is the status request command 808 is produced for transmission to the different apparatus, and thereafter a software cell whose DMA command 805 is the status return command 809 and which includes apparatus information about the different apparatus as the data is received from the different apparatus.

Here, the capacity exchange program 672 of the server 6 secures, in addition to the apparatus information table of the self apparatus which is the master apparatus, an area for collectively recording apparatus information about all of the different apparatuses, i.e., the respective slave apparatus (TV apparatus 2, TV apparatus 3, DVD recorder 4, and multiplayer 5) connected to the network in the main memory 610, and records the information as apparatus information tables of the different apparatus (slave apparatus).

As a result, in the main memory 610 of the server 6 which is the master apparatus, the apparatus information 91 of all of the information processing apparatuses connected to the network including the self apparatus is managed intensively as the apparatus information tables.

On the other hand, where the self apparatus of the capacity exchange program is a slave apparatus, the capacity exchange program acquires apparatus information about all of the different apparatus connected to the network, i.e., apparatus information about the master apparatus and all of the slave apparatus other than the self apparatus, and records information processing apparatus IDs 821 and MS statuses 831 included in the apparatus information into the main memory of the self apparatus. That is, e.g., in the case of the TV apparatus 2 in the present embodiment, the MS statuses 831 of the server 6 which is the master apparatus and the other slave apparatus which are the TV apparatus 3, DVD recorder 4, and multiplayer 5 are recorded into the main memory 210 of the self apparatus.

Thus, in the main memory of each slave apparatus, the apparatus information about the self apparatus is recorded as an apparatus information table, and the information processing apparatus IDs 821 and the MS statuses 831 of all of the master apparatus and the slave apparatus connected to the network other than the self apparatus are recorded as separate apparatus information tables. As a result, each slave apparatus can recognize information about the different apparatus, through it is only brief, and thus can determine whether a different apparatus is a master apparatus or a slave apparatus, for example.

Further, in any of the master apparatus and the slave apparatus, when the capacity exchange program receives a notification that an information processing apparatus is newly connected to the network, from the MS manager as described above, it acquires apparatus information about the information processing apparatus and records the apparatus information into the apparatus information table in the main memory as described above.

Further, in any of the master apparatus and the slave apparatus, when the capacity exchange program is notified from the MS manager as described above that the main power supply to an information processing apparatus connected to the network is disconnected or an information processing apparatus is disconnected from the network, it deletes the apparatus information table of the information processing apparatus from the main memory of the self apparatus.

Furthermore, where the information processing apparatus disconnected from the network is the master apparatus, another master apparatus is determined newly by a method such as described below.

For example, each of the information processing apparatuses that are not disconnected from the network replaces the information processing apparatus IDs 821 of the self apparatus and the different apparatus with numerical values, and compares the information processing apparatus ID of the self apparatus with the information processing apparatus IDs of the different apparatus. Where the information processing apparatus ID of the self apparatus is the lowest of the IDs of the information processing apparatus that are not disconnected from the network, the slave apparatus sets the MS status to 0, so that it functions as the master apparatus. And it acquires apparatus information about all of the different apparatuses (slave apparatuses) connected to the network for recording into the main memory of the self apparatus as described above.

Note that the MS manager and the capacity exchange program may be executed not only by the main processor but by any sub processor as well. Further, the MS manager and the capacity exchange program preferably are resident programs that operate normally while the main power is supplied to the information processing apparatus.

The basic operation regarding determination of the configurations of the master apparatus and the slave apparatus, and acquisition of apparatus information held by the respective apparatus is terminated as described above.

Next, referring successively to FIG. 17, an operation in steps S103 to S108 in FIG. 17 of visually displaying logical connection situations between the respective slave apparatus on the display section of the input/output terminal (the remote controller 7 in the present embodiment) where the user makes a request will be illustrated below, on the basis of the apparatus information 91 about all of the slave apparatus (the TV apparatus 2, TV apparatus 3, DVD recorder 4, and multiplayer 5 in the present embodiment) intensively managed within the main memory 610 of the master apparatus (the server 6 in the present embodiment) in this manner.

First, where the user operates the operation section 72 included in the remote controller 7 to make a request for displaying logical connection situations (connection information request) in step S103, the remote controller 7 receives the connection information request, and the main processor 701 of the remote controller 7 produces a software cell whose DMA command 805 is the connection information request command 814. And the remote controller 7 transmits the produced software cell to the information processing controller 60 of the server 6 in step S104. Note that an information processing apparatus as a sender, an information processing apparatus as a destination, and an information processing apparatus as a response destination are identified by the above-mentioned sender ID 801, destination ID 802, and response destination ID 803, respectively.

Next, the main processor 601 included in the information processing apparatus 60 of the server 6 having received this software cell stores the software cell into the main memory 610. The main processor 601 reads out the software cell, and decodes and processes the DMA command included therein in step S105.

The server 6 produces a software cell that includes the apparatus information 91 about all of the slave apparatuses intensively managed by the main memory 610 as the data and whose DMA command 805 is the connection information return command 815 as described above, for transmission to the remote controller 7 in step S106. The data 812 in the connection information return command includes as many sets as the number of slave apparatus, each of the sets including apparatus information as to one information processing apparatus indicated by the data 812 of the status return command 809 shown in FIG. 8.

The remote controller 7 receives this software cell, for decoding and processing in step S107. And the remote controller 7 visually displays the logical connection situations between the respective apparatus, on the basis of the apparatus information 91 of all of the slave apparatus included as the data of this software cell in step S108. Then, the process is terminated.

Note that although a case where the connection situation of the network is displayed on the display section 71 of the remote controller 7 by a request from the user has been described in the present embodiment, how the display is triggered is not limited to that. For example, it may otherwise be configured such that the apparatus information 91 about all of the slave apparatus is periodically transmitted from the server 6 to the remote controller 7, for automatic updating.

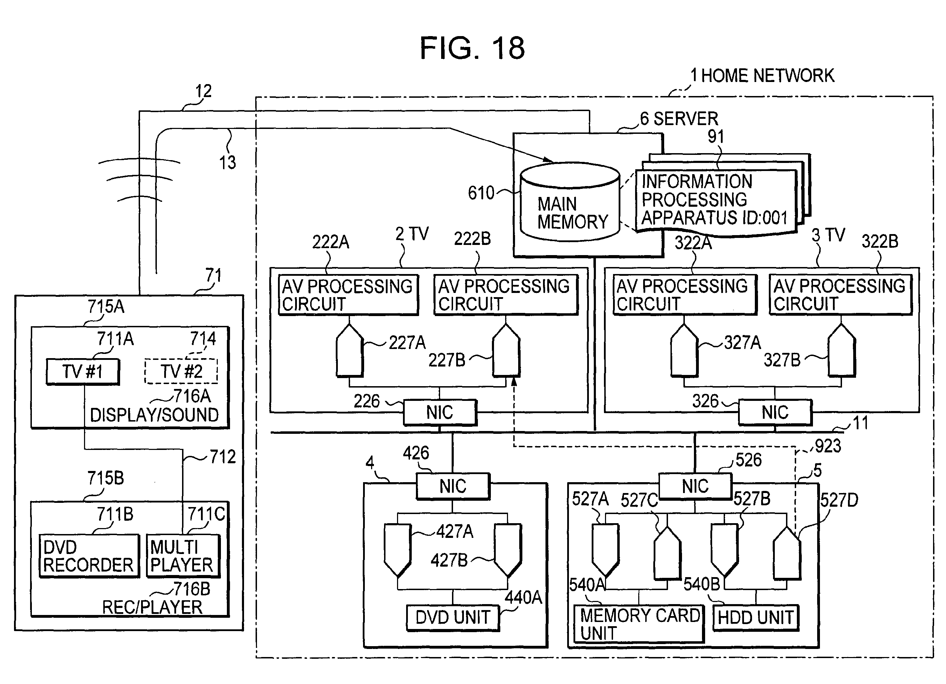

Next, referring to FIGS. 18 and 19, an operation will be described which is performed when a logical connection between the respective information processing apparatus visually set on the display section 71 of the remote controller 7 according to the embodiment of the present invention is reflected on the actual logical connection situation between the respective information processing apparatus. Here, FIG. 18 represents by abstraction an operation performed when a connection set on the display section 71 of the remote controller 7 is reflected, together with a main portion of a configuration of the information processing apparatus. Further, FIG. 19 represents a process of reflecting the connection set on the display section 71 of the remote controller 7. As shown on the display section 71 of FIG. 18 below, a description is given as to a case where the user requests the logical connection 923 between the TV apparatus 2 and the multiplayer 5 and the icons of the apparatus objects 711A, 711C corresponding to the respective apparatus are interconnected by the virtual connection line 712 on the display section 71.

Note that although in FIG. 19, no flow diagram is shown as to the TV apparatus 3 and the DVD recorder 4 functioning as the slave apparatus similarly to FIG. 17, their operation is similar to that of the slave apparatus A (TV apparatus 2) and the slave apparatus B (multiplayer 5), and thus the illustration is omitted. Further, the process in FIG. 19 is performed after the visual display process in FIG. 17, and the current logical connection situation of the respective information processing apparatuses 2 to 5 is displayed on the display section 71 of the remote controller 7.

First, when the user performs an operation of requesting a change of the logical connection situation (connection change request) to start the process in step S201, the remote controller 7 accepts the connection change request. Specifically, the user connects the icons of the apparatus objects 711A, 711C on the display section 71 of the remote controller 7 through the virtual connection line 712 using the cursor 713 as mentioned above, whereby the remote controller 7 accepts the connection change request. The cursor 713 can be moved freely by the user when the user, e.g., operates the operation section 72 included in the remote controller 7, or directly taps the display section 71 as mentioned above.

Note that a connection change request from the user may not only be made through the cursor 713 on the display section 71, but also through other methods, e.g., through input from a keyboard if the remote controller 7 includes the keyboard as the operation section 72.

On the basis of the connection change request from the user thus accepted, the remote controller 7 changes the input channel information 855 and the output channel information 856 included in the apparatus information (input channel information of the input channel 227B in the TV apparatus 2 and the output channel information of the output channel 527D in the multiplayer 5 as shown in FIG. 18 in the present embodiment) of the corresponding slave apparatus (TV apparatus 2 and multiplayer 5 in the present embodiment) which has already been acquired through the process in FIG. 17, and creates a software cell whose DMA command 805 is the connection change request command 816. The data 812 in the connection change request command is assumed to include the input channel information 855 and the output channel information 856 to be changed, in addition to the apparatus information of the apparatus of interest. And the remote controller 7 transmits the created software cell to the server 6 along a route 13 such as shown in FIG. 18 in step S202.

The server 6 receives, decodes and processes the above-mentioned software cell whose DMA command is the connection change request command from the remote controller 7 in step S203. And the server 6 specifies the corresponding slave apparatus on the basis of the input channel information 855 and the output channel information 856 included in the apparatus information in this software cell, and transmits the software cell by properly assigning it to the specified respective slave apparatus (TV apparatus 2 and multiplayer 5 in the present embodiment) in step S204.

Next, each of the specified slave apparatus receives, decodes, and processes this software cell in steps S205A to S205B. These slave apparatus change the actual logical connection between the input channel and output channel (the input channel 227B in the TV apparatus 2 and the output channel 527D in the multiplayer 5 in the present embodiment) on the basis of the input channel information 855 and the output channel information 856 included in the apparatus information in this software cell in steps S206A to S206B), whereby the process of reflecting the visually set logical connection is terminated.

Next, referring successively to FIGS. 18 and 20, an operation will be described which is performed when the connection reflected in steps S201 to S206A, 206B is visually displayed on the display section 71 of the remote controller 7. Here, FIG. 20 represents a process of visually displaying the reflected connection on the display section 71 of the remote controller 7.

Note that although in FIG. 20, no flow diagram is illustrated as to the TV apparatus 3 and the DVD recorder 4 functioning as the slave apparatus similarly to FIGS. 17 and 19, their operation is similar to that of the slave apparatus A (TV apparatus 2) and the slave apparatus B (multiplayer 5), and thus the illustration is omitted. Further, the process in FIG. 20 is performed after the process of reflecting the connection change request in FIG. 19, and it is assumed that the logical connection situation in the respective information processing apparatuses 2 to 5 has already been changed.

First, in this case, as mentioned above, the server 6, TV apparatus 2, and multiplayer 5 execute their capacity exchange programs to exchange apparatus information which is held by the respective slave apparatus (TV apparatus 2 and multiplayer 5 in the present embodiment) and in which the input channel information 855 and the output channel information 856 have been changed. Then, the server 6 updates the changed apparatus information about the TV apparatus 2 and the multiplayer 5 for recording into the main memory 610 in steps S210A to S210C.

Next, the TV apparatus 2 and the multiplayer 5 creates a software cell whose DMA command 805 is the connection change return command 817, for transmission to the server 6 in steps S211A to S211B. The data 812 in the connection change return command is assumed to include the changed input channel information 855 and output channel information 856 in addition to the apparatus information about the apparatus of interest. The server 6 receives, decodes, and processes this software cell in step S212. And the server 6 re-arranges this software cell including the changed apparatus information about the TV apparatus 2 and the multiplayer 5, for transmission to the remote controller 7 in step S213.

The remote controller 7 receives this software cell, and decodes and processes the data in step S214. And, as mentioned above, the remote controller 7 updates the visual display on the basis of the input channel information 855 and the output channel information 856 included in the changed apparatus information about the TV apparatus 2 and the multiplayer 5 (the input channel information about the input channel 227B in the TV apparatus 2 and the output channel information about the output channel 527D of the multiplayer 5 as shown in FIG. 18 in the present embodiment) in step S215. Then, the process is terminated.

Note that here, where there is a request for changing the logical connection situation from the user as mentioned above, each of the information processing apparatuses 2 to 5 determines connection routing between the input channel and the output channel on the basis of the apparatus information included in the software cell transmitted from the server 6. And, when the user thereafter performs some operation to execute the function program 88 such as, e.g., reproduction or recording, time-division data between the input/output channels is exchanged. This time-division data will hereinafter be referred to as "packet".

In the present embodiment, the transmission path of the network is the LAN cable 11, that forms a shared network. Thus, for correct transmission/reception of a plurality of packets between the input/output channels included in each of the information processing apparatuses 2 to 5, apparatus information about a destination must be included in these plurality of packets. A scheme of time-division multiplexing process for data to be exchanged between the input/output channels included in each of the information processing apparatuses 2 to 5 will be described below.

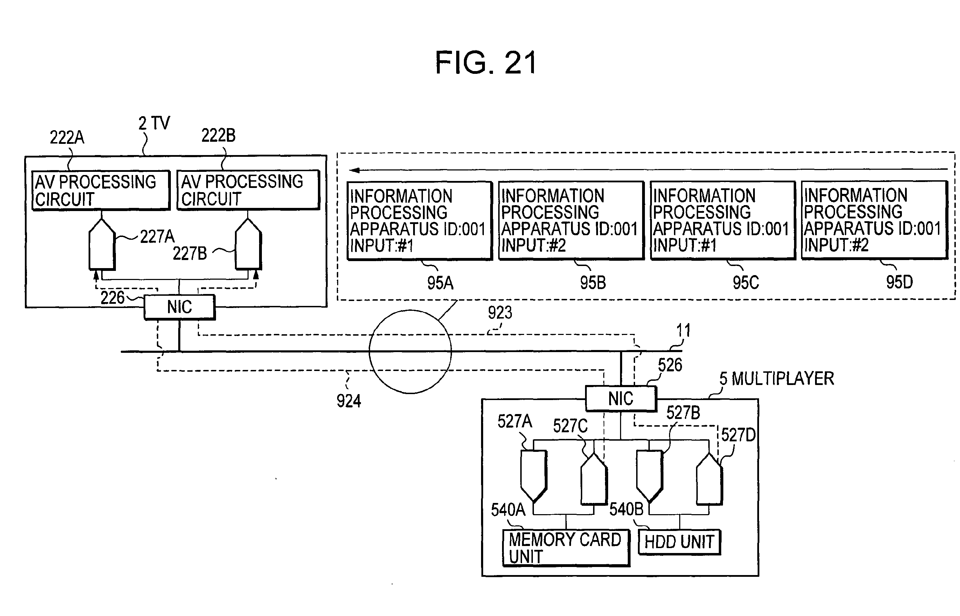

FIG. 21 represents by abstraction an operation of the time-division multiplexing process for data to be exchanged between input/output channels together with a part of a main portion of a configuration of the information processing system. This figure is an extraction of only a part of the figures represented by abstraction in FIGS. 15 and 18, and shows only the TV apparatus 2 and the multiplayer 5 in the information processing system according to the present embodiment. Further, in this figure, in addition to the logical connection 923 between the output channel 527D in the multiplayer 5 and the input channel 227B in the TV apparatus 2, a logical connection 924 between the output channel 527C in the multiplayer 5 and the input channel 227A in the TV apparatus 2 is also made, and thus indicates that data is subjected to a time-division multiplexing process as a plurality of packets 95A to 95D.

Here, as mentioned above, in the apparatus information included in the software cell transmitted to each of the information processing apparatuses 2 to 5 from the server 6, connection destinations of the input channels and the output channels included in the information processing apparatus are clearly indicated as the input channel information 855 and the output channel information 856. In this case, it is the output channels 527C, 527D of the multiplayer 5 that output the packets, and thus the multiplayer 5 transmits the packets to the input channels 227A, 227B of the TV apparatus 2, which are connection destinations, in the following manner.

First, the multiplayer 5 having received the software cell from the server 6 determines the headers of the packets from the information processing apparatus ID 821 of the connection destination and the input channel number of the information processing apparatus described in the output channel information 856. That is, in this case, from the information processing apparatus ID ("001" as shown by the apparatus information 91A in FIG. 15) of the TV apparatus 2 and the input channel numbers of the two input channels 227A, 227B included in the TV apparatus 2, the headers of the packets are determined.

As mentioned above, when the user thereafter performs some operation to execute the function program 88 such as, e.g., reproduction or recording, data are generated from the DVD unit 540A and the HDD unit 540B connected to the output channels 527C, 527D. And using the generation as a trigger, the data flow from the respective output channels 527C, 527D to the NIC 526, and the NIC 526 having received these data gives to the heads of the data the information processing apparatus ID and the input channel numbers of the TV apparatus 2 which is the connection destination, and further adds an ordinary IP header thereto, to form time-division packets for transmission to the LAN cable 11.

Here, e.g., where there are a plurality of output channels 527C, 527D as in the multiplayer 5 in the present embodiment, the NIC 526 which is a single component is used to subject the data to a time-division multiplexing process to obtain a plurality of packets 95A to 95D, as in FIG. 21, for transmission to the input channels 227A, 227B of the TV apparatus 2 which is the other party. Data flow control in this case is as follows. For example, it is assumed that in the transport layer and the network layer of the OSI reference model, the existing TCP/IP (Transmission Control Protocol/Internet Protocol) flow control is used, whereas in the physical layer, CSMA/CD (Carrier Sense Multiple Access with Collision Detection) of Ethernet (registered trademark) is used. Further, it is also assumed that in the application layer, transfer based on, e.g., the round-robin system is used.

The plurality of packets 95A to 95D which the TV apparatus 2 receives arrive through the same LAN cable. That is, as shown in FIG. 21, the TV apparatus 2 receives the plurality of packets 95A to 95D through the logical connections 923, 924. Here, these plurality of packets addressed to the plurality of input channels included in the TV apparatus 2 are all received through the same NIC 226, and thus the NIC 226 performs an operation of analyzing the header of each of the packets to specify the corresponding input channels 227A, 227B and the respective circuit units (AV processing circuits 222A, 222B) connected thereto, and properly assigning the plurality packets 95A to 95D. Further, in this instance, for any packet whose connection destination is not the information processing apparatus ID 821 of the self apparatus, the NIC 226 does not receive the packet.

In this manner, when the user performs some operation to execute a function program, apparatus information about a destination is included in a plurality of packets to be exchanged between input/output channels, and thus the plurality of packets can be transmitted/received correctly between the input/output channels included in each of the information processing apparatuses 2 to 5.

As described above, according to the information processing system and method of the present embodiment, the server 6 functioning the master apparatus gathers and manages the apparatus information 91A to 91D held by the TV apparatus 2, TV apparatus 3, DVD recorder 4, and multiplayer 5 functioning as the slave apparatus, and further, supplies the information to the remote controller 7, while the remote controller 7 functioning as the input/output terminal visually displays a logical connection situation on the basis of logical connection information included in the apparatus information. As a result, the user can grasp communication situations between all of the apparatus within the network instinctively and easily.

Further, according to the information processing system and method of the present embodiment, the remote controller 7 functioning as the input/output terminal accepts a change request operation for requesting change of a mutual logical connection situation between the TV apparatus 2, TV apparatus 3, DVD recorder 4, and multiplayer 5 functioning as the slave apparatus, and the server 6 functioning as the master apparatus specifies the corresponding slave apparatus on the basis of the change request, assigns and transmits the change request to the specified slave apparatus, while the slave apparatus receive the change request as to the mutual logical connection situation between the self apparatus and the different apparatus, and actually changes the mutual logical connection situation between the self apparatus and the different apparatus on the basis of the change request. As a result, the user can set and change connection situations of the network instinctively and easily.

Furthermore, according to the information processing system and method of the present embodiment, transmission/reception of apparatus information between the server 6 functioning the master apparatus and the TV apparatus 2, TV apparatus 3, DVD recorder 4, and multiplayer 5 functioning as the slave apparatus is performed by using software cells, each of which is a control packet having a predetermined format for exchanging programs and data. As a result, by operating only the remote controller 7 functioning as the input/output terminal, the user can operate the information processing apparatus as a virtual single apparatus without operating different information processing apparatus.

As described above, according to the information processing system and method of the present embodiment, logical connection situations of the network can be grasped instinctively and easily, and further, a means for setting and changing the logical connection situations is also provided. As a result, a network connection environment extremely useful for the user can be constructed.

Particularly, when considering scenes such as a home network within a home, not management of a network such as a LAN within a company, the following things may potentially be implemented, with tremendous advantages.

First, conventional cable connections between equipment have been made through dedicated terminals, and the cables used have also been dedicated. However, according to the present embodiment, only the LAN cable 11 should be connected, and thus the user no longer has to be worried about complicated connection. Further, the input/output channels included in each of the information processing apparatuses 2 to 5 are managed as abstracted objects, and thus the user does not have to be aware of the presence of such plurality of input/ output channels.

Further, the input/output channels of each of the information processing apparatuses 2 to 5 are abstracted, and exchange of data between them is totally realized within a single network. As a result, complicated cable wiring and the like can be eliminated, and physical positional restrictions due to such cable wiring and the like can be eased. For example, in the present embodiment, where the TV apparatus 2 and the DVD recorder 4 are located in a room A, and the TV apparatus 3 and the multiplayer 5 are located in a room B, even if the user stays in the room B, the user can connect, e.g., the TV apparatus 2 and the multiplayer 5 as shown by the examples of FIGS. 18 to 20.

That is, network connections and data routing between the respective information processing apparatus can be visually displayed and set, and thus, without having technical knowledge, such as IP addresses and network routing, the user can connect the respective information processing apparatus to each other in a manner similar to conventional connections using dedicated cables (e.g., connection using a composite terminal and a S (Separate) terminal between a TV apparatus and a video recorder).

While the present invention has been described with reference to the specific embodiment, the present invention is not limited to this embodiment, but may be modified in various manners.

For example, first, while the information processing system is formed from a plurality of slave apparatus and a single master apparatus that manages them in the present embodiment, example configurations of the information processing system are not limited to this. For example, all of the information processing apparatuses may be formed only from slave apparatus. In this case, it may be configured such that all of the slave apparatus record and manage apparatus information of all of the slave apparatus.

Further, while the slave apparatus and the input/output terminal have been described as distinguished from each other in the present embodiment, they are not always formed to be distinguished from each other. As long as a slave apparatus includes an input/output function and a display function, the slave apparatus can be made to function as an input/output terminal. That is, all of the slave apparatus may be formed as input/output terminals. Further, in some cases, the server 6 functioning as the master apparatus may be made to function as an input/output terminal by including an image display function.

Furthermore, in the example of visual display of FIG. 16 in the present embodiment, the remote controller 7 itself functioning as the input/output terminal and the server 6 functioning as the master apparatus are not displayed on the display section 71. However, forms of display of network connection situations are not limited to this. That is, the entire information processing system may be displayed by, e.g., including the remote controller 7 itself and the server 6 on the display section 71.

Furthermore, while the examples in which network connection situations are displayed and set visually (graphically and textually) have been presented in the present embodiment, embodiments of the present invention are not limited to this. For example, audible methods such as input/output of audio data may also be used, instead of the visual method. That is, any other methods may also be usable as long as such methods allow the user to grasp network connection situations and change connections freely.

Furthermore, in the example configuration of the information processing system of FIG. 1, the server 6 and the respective information processing apparatuses 2 to 5 are interconnected through the single LAN cable 11. However, embodiments of the present invention are not limited to this. Instead of a LAN, various other networks may be used. Furthermore, operation with apparatus connected to a different network may also be implementable by using, e.g., a router.
Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An input/output terminal to be applied to an information processing system configured by connecting a plurality of information processing apparatuses to a network comprising:
an acquisition section for acquiring logical connection information designating a mutual logical connection status between information processing apparatuses; and
a display section for displaying the logical connection status based on the logical connection information acquired by the acquisition section.

2. The input/output terminal as cited in claim 1, wherein
each of the information processing apparatuses includes one or more of input/output channels; and
the logical connection information designates a logical connection status between each input/output channel of one of the information processing apparatuses and each input/output channel of another of the information processing apparatuses.

3. The input/output terminal as cited in claim 1, wherein
the display section visually displays the logical connection status.

4. The input/ output terminal as cited in claim 3, wherein
the display section graphically displays a plurality of abstract apparatus objects of the information processing apparatuses, and a virtual connection line between the abstract apparatus objects of the logical connection information.

5. The input/output terminal as cited in claim 4, wherein
the acquisition section acquires an additional information including at least one of identification information, type, characteristic, and power source information of the information processing apparatuses in addition to the logical connection information; and
the display section graphically displays a content of the additional information together with the apparatus objects.

6. The input/output terminal as cited in claim 4, wherein
the display section includes a function for accepting a graphical change request operation requesting a change of the logical connection status.

7. The input/output terminal as cited in claim 1, wherein
the plural information processing apparatuses includes a plurality of slave apparatuses and master apparatuses to manage each slave apparatus, and function as the slave apparatuses.

8. The input/output terminal as cited in claim 7, wherein
the acquisition section acquires from the master apparatus the logical connection information gathered from each slave apparatus by the master apparatus.

9. The input/output terminal as cited in claim 8, wherein
the acquisition section acquires from the master apparatus the logical connection information using a software cell which is data having a predetermined format.

10. A program adopted to an input/output terminal of an information processing system configured by connecting a plurality of information processing apparatuses to a network, comprising:
a step of acquiring logical connection information designating a mutual logical connection status between the information processing apparatuses; and
a step of displaying the logical connection status based on the acquired logical connection information.

11. A master apparatus of an information processing system configured to include a plurality of slave apparatuses connected to a network, a master apparatus connected to the network for managing each slave apparatus, and an input/output terminal having a data input/output function, comprising:
a connection information gathering section for gathering logical connection information designating a mutual logical connection status between slave apparatus from each of the slave apparatus;
a management section for managing the logical connection information gathered by the connection information gathering section; and
a connection information supplying section for supplying the logical connection information managed by the management section to at least one of an input/ output terminal and the slave apparatus.

12. The master apparatus as cited in claim 11, wherein
each slave apparatus includes one or more of input/output channels; and
the logical connection information designates a logical connection status between each input/output channel of one of the slave apparatuses and each input/output channel of another of the slave apparatuses.

13. The master apparatus as cited in claim 11, wherein
at least one of the connection information gathering section and the connection information supplying section supplies the logical connection information to at least one of the input/output terminal and the slave apparatus.

14. The master apparatus as cited in claim 11, further comprising:
a change request transmission section for specifying the corresponding slave apparatus based on a change request for the logical connection status done through the input/output terminal, and transmitting the change request to the specified slave apparatus.

15. The master apparatus as cited in claim 14, wherein
the change request transmission section transmits the change request for the logical connection status using a software cell which is data having a predetermined format.

16. A program to be adopted to a master apparatus of an information processing system configured to include a plurality of slave apparatuses connected to a network, a master apparatus connected to the network for managing each slave apparatus, and an input/output terminal having a data input/output function, comprising:
a step of gathering logical connection information designating a mutual logical connection status between slave apparatus from each of the slave apparatus;
a step of managing the gathered logical connection information; and
a step of supplying the logical connection information managed to at least one of an input/output terminal and the slave apparatus.

17. A slave apparatus of an information processing system configured by connecting a plurality of slave apparatuses and a master apparatus for managing each slave apparatus, comprising:
a holding section for holding logical connection information designating a mutual logical connection status between a self apparatus and a different apparatus; and
a connection information transmission section for transmitting the logical connection information to the master apparatus.

18. The slave apparatus as cited in claim 17, wherein
each slave apparatus includes one or more of input/output channels; and
the logical connection information designates a logical connection status between each input/output channel of the self apparatus and each input/ output channel of the different apparatus.

19. The slave apparatus as cited in claim 17, wherein
the connection information transmission section transmits the logical connection information to the master apparatus using a software cell which is data having a predetermined format.

20. The slave apparatus as cited in claim 17, further comprising:
a reception section for receiving a change request of the logical connection status transmitted from the master apparatus; and
a changing section for changing mutual logical connection status between a self apparatus and a different apparatus based on the change request of the of the logical connection status received by the reception section.

21. The slave apparatus as cited in claim 20, wherein
the reception section receives the change request of the logical connection status transmitted from the master apparatus using a software cell which is data having a predetermined format.

22. A program to be adopted to a slave apparatus of an information processing system configured by connecting a plurality of slave apparatuses and a master apparatus for managing each slave apparatus, comprising:
a step of holding logical connection information designating a mutual logical connection status between a self apparatus and different apparatus; and
a step of transmitting the logical connection information to a master apparatus.

23. An information processing system configured to include a plurality of slave apparatuses connected to a network, a master apparatus connected to the network for managing each slave apparatus, and an input/output terminal having a data input/output function, wherein
the slave apparatus comprises;
a holding section for holding logical connection information designating a mutual logical connection status between a self apparatus and different apparatus; and
a connection information transmission section for transmitting the logical connection information to a master apparatus;
the master apparatus comprises;
a connection information gathering section for gathering the logical connection information;
a management section for managing the logical connection information gathered by the connection information gathering section; and
a connection information supplying section for supplying the logical connection information managed by the management section to at least one of the input/output terminal and the slave apparatus; and
the input/output terminal comprises;
an acquisition section for acquiring the logical connection information; and
a display section for displaying the logical connection status between the slave apparatus based on the logical connection information acquired by the acquisition section.

24. An information processing method adopted to an information processing system configured to include a plurality of slave apparatuses connected to a network, a master apparatus connected to the network for managing each slave apparatus, and an input/output terminal having a data input/output function, wherein
process by the input/ output terminal comprises;
a step of acquiring logical connection information designating a mutual logical connection status between the slave apparatus; and
a step of displaying the logical connection status on the basis of the logical connection information;
process by the master apparatus comprises;
a step of gathering the logical connection information from the respective slave apparatus;
a step of managing the logical connection information gathered; and
a step of supplying the logical connection information managed to at least one of the input/output terminal and the slave apparatus; and
process by the slave apparatus comprises;
a step of holding the logical connection information between a self apparatus and different apparatus; and
a step of transmitting the logical connection information to the master apparatus.
